# EUROPÄISCHE PATENTSCHRIFT

(11) **EP 4 302 582 B1**
(45) Veröffentlichungstag und Bekanntmachung des Hinweises auf die Patenterteilung: **24.06.2026**
(21) Anmeldenummer: 23211928.9
(22) Anmeldetag: 31.03.2021
(51) Int. Cl.: A01B 23/02, A01B 63/00, A01B 63/32, A01B 33/02, A01B 35/06, A01B 39/18

(54) **BODENBEARBEITUNGSMASCHINE, VORZUGSWEISE LANDWIRTSCHAFTLICHER HACKSTRIEGEL UND VERFAHREN ZUM EINSTELLEN EINER VORSPANNKRAFT AN EINEM HACKSTRIEGEL**
SOIL WORKING MACHINE, PREFERABLY AGRICULTURAL HARROW, AND METHOD FOR ADJUSTING A TENSIONING FORCE ON A HARROW
MACHINE DE TRAITEMENT DU SOL, DE PRÉFÉRENCE HERSE-ÉTRILLE AGRICOLE ET PROCÉDÉ DE RÉGLAGE D'UNE FORCE DE PRÉCONTRAINTE SUR UNE HERSE-ÉTRILLE

(30) Priorität: 27.04.2020 DE 102020111400
(43) Veröffentlichungstag der Anmeldung: 10.01.2024
(62) Teilanmeldung aus: 21166241.6
(73) Patentinhaber: Horsch Maschinen SE & Co. KG, 92421 Schwandorf (DE)
(72) Erfinder: Stangl, Josef, 92421 Schwandorf (DE)
(74) Vertreter: v. Bezold & Partner Patentanwälte - PartG mbB

(56) Entgegenhaltungen:
- EP-A1- 1 349 442
- EP-A1- 2 868 177
- EP-A1- 3 578 024
- AT-U2- 16 450
- DE-A1- 102018 211 814

## Beschreibung

Die Erfindung betrifft eine Bodenbearbeitungsmaschine, vorzugsweise einen landwirtschaftlichen Hackstriegel. Die Erfindung betrifft zudem Verfahren zum Einstellen einer Vorspannkraft von Striegelzinken an einem landwirtschaftlichem Hackstriegel.

Zur mechanischen Unkrautbekämpfung werden landwirtschaftliche Hackstriegel eingesetzt. Deren Wirkprinzip beruht darauf, dass diese Unkräuter ausreißen und mit Erde verschütten. In der Regel weisen derartige Hackstriegel zudem eine große Arbeitsbreite von bis zu 18 Meter und mehr auf.

Ein derartiger Hackstriegel wurde durch die DE 10 2007 008 616 A1 bereits bekannt. Der Hackstriegel umfasst eine Rahmenkonstruktion mit einer Mehrzahl von Striegelzinken, wobei diese mittels einer sog Zinkendruckverstelleinheit schwenkbar gegenüber der Rahmenkonstruktion gelagert sind, um somit eine Vorspannung der Striegelzinken gegenüber einer Bodenfläche einzustellen. Die Zinkendruckverstelleinheit ist derartig ausgeführt, dass mittels dieser zentral und einheitlich alle Striegelzinken des Hackstriegel verstellt werden, insbesondere auf eine gewünschte Arbeitstiefe der Striegelzinken eingestellt werden. Eine Anpassung der Zinkendruckverstelleinheit erfolgt anhand einer Einstellvorgabe durch eine Bedienperson des Hackstriegel.

Ein weiterer Hackstriegel wurde durch die AT 16504 U2 bekannt. Um einen sich selbst einstellenden Hackstriegel zu schaffen ist vorgesehen, dass mittels eines Kamerasystem ein durch die Striegelzinken erzeugter Pflanzenverschüttungsgrad erfasst und die Ausrichtung der Striegelzinken anhand dieses Pflanzenverschüttungsgrad auf einen gewünschten Wert angepasst wird. Nachteilig ist jedoch, dass Kamerasysteme zum einen staub- und stoßempfindlich sind, sowie dass eine Verstellung der Striegelzinken zentral und einheitlich über die gesamte Arbeitsbreite des Hackstriegel erfolgt. Das Dokument EP 3 578 024 A1 offenbart einen landwirtschaftlichen Hackstriegel mit Striegelzinken, die schwenkbar gegenüber der Rahmenkonstruktion gelagert sind. I

Aufgabe der Erfindung ist es somit, eine Bodenbearbeitungsmaschine, vorzugsweise einen landwirtschaftlichen Hackstriegel zu schaffen, der eine flexible Anpassung der auf Striegelzinken wirkenden Vorspannkräfte ermöglicht.

Diese Aufgabe wird gelöst durch eine Bodenbearbeitungsmaschine, nämlich einen landwirtschaftlichen Hackstriegel mit den Merkmalen des unabhängigen Anspruch 1, sowie durch ein Verfahren mit den Merkmalen des Verfahrensanspruchs 19. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft eine Bodenbearbeitungsmaschine, vorzugsweise einen landwirtschaftlichen Hackstriegel, mit einer Rahmenkonstruktion und mit einer Mehrzahl von beabstandet nebeneinander und in mehreren Reihen hintereinander angeordneten Striegelzinken, welche Striegelzinken schwenkbar gegenüber der Rahmenkonstruktion gelagert sind und jeweils mit einer Vorspanneinrichtung gekoppelt (z.B. wirktechnisch verbunden) sind.

Um eine Bodenbearbeitungsmaschine, vorzugsweise einen landwirtschaftlichen Hackstriegel zu schaffen, der eine flexible Anpassung der auf Striegelzinken wirkenden Vorspannkräfte ermöglicht ist erfindungsgemäß vorgesehen, dass die Striegelzinken in zumindest eine erste Gruppe von Striegelzinken mit einer ersten Vorspanneinrichtung und zumindest eine zweite Gruppe von Striegelzinken mit einer zweiten Vorspanneinrichtung unterteilt sind und die erste Vorspanneinrichtung unabhängig von der zweiten Vorspanneinrichtung verstellbar ist.

Infolge der erfindungsgemäßen Maßnahmen wird somit eine landwirtschaftliche Bodenbearbeitungsmaschine, vorzugsweise ein Hackstriegel geschaffen, mit dem es ermöglicht wird, flexibel auf unterschiedlichste Arbeitsbedingungen reagieren zu können und immer weitgehend optimale gewünschte Einstellungen zu erreichen.

Es sei darauf hingewiesen, dass im Kontext der Erfindung, die im vorliegenden definierten zumindest zwei Gruppen nicht einschränkend sind, sondern auf eine beliebige Anzahl von Gruppen erweiterbar sind, jedoch jeweils zumindest zwei Gruppen (d.h. eine erste Gruppe und eine zweite Gruppe) jeweils mittels einer Vorspanneinrichtung (d.h. mit einer ersten Vorspanneinrichtung und einer zweiten Vorspanneinrichtung) unabhängig voneinander verstellbar sind. Eine Gruppe kann zudem auch mehrere Einheiten, die vorzugsweise jeweils gleich sind, umfassen.

Die Bodenbearbeitungsmaschine ist als ein Hackstriegel ausgeführt. Wobei ein erfindungsgemäßer Hackstriegel auch sog. Schwerstriegel, Ackerstriegel oder dergl. beinhaltet und umfasst. Die erfindungsgemäße Bodenbearbeitungsmaschine wird zweckmäßig insbesondere zur mechanischen Unkrautbekämpfung eingesetzt.

Zur Erreichung einer großen Schlagkraft, weist die Bodenbearbeitungsmaschine insbesondere eine sich quer zu einer Fahrtrichtung erstreckende große Arbeitsbreite von bspw. 6 Meter, 9 Meter, 12 Meter, 18 Meter oder mehr auf und setzt sich bspw. aus einem Mittelteil und rechts und links mittels Schwenkachsen schwenkbar am Mittelteil gelagerten Seitenteilen zusammen. Wobei die Seitenteile und/oder das Mittelteil zur Erreichung einer für eine Straßenfahrt erforderliche Arbeitsbreite auch entsprechend um die Schwenkachsen in eine Transportposition verschwenkt werden können, vorzugsweise mittels eines Stellantrieb verschwenkt werden können.

Eine erste Gruppe von Striegelzinken kann bspw. dem Mittelteil oder einem Seitenteil zugeordnet sein. Die zweite Gruppe von Striegelzinken kann dementsprechend einem Seitenteil oder einem gegenüberliegenden Seitenteil zugeordnet sein.

Es kann vorgesehen sein, dass die Bodenbearbeitungsmaschine, d.h. vorzugweise der landwirtschaftliche Hackstriegel als eine selbstfahrende oder als eine mittels eines Zugfahrzeug (z.B. Traktor) und ein Fahrwerk aufweisende gezogene oder als eine an einem Zugfahrzeug angebaute (z.B. mittels 3-Punkt-Anhängung) Bodenbearbeitungsmaschine ausgeführt ist. Die Bodenbearbeitungsmaschine kann zudem eine autonome (z.B. teilautonom oder vollautonom) Bodenbearbeitungsmaschine sein.

Es ist möglich, dass die Striegelzinken drehbar an einem Träger (z.B. drehbar zu einem Träger) der Rahmenkonstruktion gelagert sind. Wobei vorzugsweise zwei oder mehr Striegelzinken beabstandet zueinander an einem Träger drehbar gelagert sind.

Alternativ oder ergänzend ist es möglich, dass die Striegelzinken an einem Träger gelagert sind (z.B. drehbar gelagert oder drehfest gelagert) und der Träger drehbar und/oder höhenverstellbar gegenüber der Rahmenkonstruktion an der Rahmenkonstruktion gelagert ist.

Bei einem vorteilhaften Ausführungsbeispiel können die Striegelzinken vorzugsweise an zumindest einem Träger gelagert sein, wobei der zumindest eine Träger z. B. drehfest (z. B. undrehbar, vorzugsweise verschraubt, verklebt oder verschweißt etc.) und/oder höhenverstellbar gegenüber der Rahmenkonstruktion an der Rahmenkonstruktion gelagert sein kann.

Um eine Möglichkeit zu schaffen, auch mit einer eine große Arbeitsbreite aufweisenden Bodenbearbeitungsmaschine eine möglichst flexible Anpassung über die gesamte Arbeitsbreite an unterschiedliche Bedingungen (z.B. Bodenbedingungen) zu erreichen, **ist** gemäß der Erfindung vorgesehen, dass die zumindest eine erste Gruppe von Striegelzinken und die zumindest eine zweite Gruppe von Striegelzinken eine Mehrzahl von nebeneinander an einem Träger gelagerte Striegelzinken umfasst.

Um eine Möglichkeit zu schaffen die Vorspannkräfte von mehreren an hintereinander angeordneten Trägern gelagerten Striegelzinken, insbesondere die Vorspannkräfte an Striegelzinken nachgeordneten weiteren Striegelzinken anzupassen und somit zweckmäßig an bereits durch vorgeordnete Striegelzinken bearbeitete Bodenbedingungen anzupassen, kann gemäß einer alternativen oder ergänzenden Ausführungsvariante der Erfindung vorgesehen sein, dass die zumindest eine erste Gruppe von Striegelzinken und/oder die zumindest eine zweite Gruppe von Striegelzinken eine Mehrzahl von an zumindest zwei hintereinander angeordneten Trägern gelagerte Striegelzinken umfasst.

Zur Erreichung einer flexiblen Einstellung der Vorspannkräfte, bspw. im Bereich von Fahrspuren oder im Bereich von Reihenkulturen, kann gemäß einer alternativen oder ergänzenden Ausführungsvariante der Erfindung vorgesehen sein, dass die zumindest eine erste Gruppe von Striegelzinken und/oder die zumindest eine zweite Gruppe von Striegelzinken eine Mehrzahl von nebeneinander an einem Träger gelagerte Striegelzinken umfasst und eine Mehrzahl von an zumindest zwei hintereinander angeordneten Trägern gelagerte Striegelzinken umfasst.

Die Vorspanneinrichtung kann zweckmäßig durch einen mechanischen Verstellmechanismus (z.B. Stecksystem, Rastsystem, Lochkulisse und/oder dergl.) gebildet sein, der durch eine Bedienperson entsprechend, vorzugsweise manuell, verstellt werden kann.

Die Vorspanneinrichtung kann alternativ oder ergänzend durch eine motorische Stelleinrichtung gebildet sein, bspw. durch einen elektrisch und/oder hydraulisch und/oder pneumatisch betriebenen Aktor (z.B. Linearantrieb, Zylinder).

Die Vorspanneinrichtung kann einfachwirkend sein und bspw. durch einen einfachwirkenden Hydraulikzylinder oder Pneumatikzylinder gebildet sein, die Vorspanneinrichtung kann alternativ oder ergänzend doppeltwirkend sein und bspw. durch einen doppeltwirkenden Hydraulikzylinder oder Pneumatikzylinder gebildet sein. Wobei zweckmäßig mittels des doppeltwirkenden Zylinders erreicht werden kann, dass die Striegelzinken auch ausgehoben werden können oder in deren Vorspannkraft (d.h. in deren Kraft mit der diese entlang einer Bodenfläche geführt werden) entlastet werden können und/oder deren Arbeitstiefe definiert verringert werden kann.

Die Vorspanneinrichtung kann alternativ oder ergänzend mit einer Überlastsicherung gekoppelt (z.B. wirktechnisch verbunden) sein. Die Überlastsicherung kann bspw. durch ein oder mehrere Federelemente (z.B. Schraubendruckfeder, Schraubenzugfeder, Elastomerlager und/oder dergl.) gebildet sein.

Im Kontext der Erfindung umfasst eine Koppelung der Überlastsicherung mit einer Vorspanneinrichtung zweckmäßig insbesondere, dass die Überlastsicherung mit der Vorspanneinrichtung verbunden ist. Es wäre jedoch auch denkbar, dass die Überlastsicherung in die Vorspanneinrichtung integriert ist und/oder die Vorspanneinrichtung entsprechend ausgeführt ist, dass diese auch eine Überlastsicherung mit ausbildet, bspw. eine hydraulische oder pneumatische Überlastsicherung mittels eines Druckspeicher.

Die Überlastsicherung kann insbesondere derartig ausgeführt sein, dass mittels dieser eine Vorspannkraft, d.h. eine Kraft mit der ein Striegelzinken entlang einer Bodenfläche geführt wird, erzeugt werden kann.

Die Überlastsicherung kann derartig ausgeführt sein, dass diese in Abhängigkeit eines Vorspannweges eine Vorspannkraft erzeugt, d.h. dass die mittels dieser erzeuge Vorspannkraft je größer ist, desto weiter diese Verspannt wird, wobei der Vorspannweg vorzugsweise durch die Vorspanneinrichtung definiert werden kann und wobei die Kraftzunahme direkt proportional oder indirekt proportional zum Vorspannweg sein kann. Zweckmäßig kann somit der Verfahrweg der Vorspanneinrichtung auf, die durch den Vorspannweg definierte Vorspannkraft abgestimmt sein.

Die Ansteuerung der Vorspanneinrichtung kann manuell durch eine Bedienperson erfolgen, die Ansteuerung der Vorspanneinrichtung kann alternativ oder ergänzend mittels einer Steuereinrichtung, vorzugsweise automatisiert, erfolgen.

Um eine flexible, sich automatisch einstellende Bodenbearbeitungsmaschine zu schaffen, kann gemäß einer Weiterbildung der Erfindung vorgesehen sein, dass zumindest einer ersten Gruppe von Striegelzinken und/oder zumindest einer zweiten Gruppe von Striegelzinken zumindest eine (oder jeder Gruppe eine) Erfassungseinrichtung zur Erfassung einer Stellgröße für die erste Vorspanneinrichtung und/oder die zweite Vorspanneinrichtung zugeordnet ist. Zweckmäßig wirktechnisch mit dieser gekoppelt ist, bspw. mittels einer Steuereinrichtung gekoppelt ist.

Die zumindest eine Erfassungseinrichtung kann dazu eingerichtet sein, mittelbar (z.B. mittels Zwischenglieds, Zusatzbaugruppe oder dergl.) oder unmittelbar (z.B. direkt, ohne Zusatzbaugruppe) eine Stellgröße für die Vorspanneinrichtung zu erfassen (z.B. detektieren, ermitteln, messen), wobei dies insbesondere eines von folgendem umfassen kann:
- eine Arbeitstiefe von zumindest einem Striegelzinken (z.B. einer ersten Gruppe und/oder einer zweiten Gruppe von Striegelzinken) und/oder
- eine Vorspannkraft von zumindest einem Striegelzinken (z.B. eine Kraft mit der zumindest ein Striegelzinken entlang einer Bodenfläche geführt wird) und/oder
- eine Beschleunigung von zumindest einem Striegelzinken (vorzugsweise Frequenz dessen Schwenkbewegungen, z. B. wenn er entlang Bodenfläche bewegt wird),
- eine Winkellage von zumindest einem Striegelzinken (z.B. ein Winkel von zumindest einem Striegelzinken gegenüber der Rahmenkonstruktion und/oder einer Bodenfläche, vorzugsweise Frequenz dessen Schwenkbewegungen, z. B. wenn er entlang Bodenfläche bewegt wird) und/oder
- eine Lage der Rahmenkonstruktion (z.B. eine Winkellage und/oder ein Abstand der Rahmenkonstruktion gegenüber einer Bodenfläche und/oder eine Lage der Rahmenkonstruktion gegenüber zumindest einen Striegelzinken oder eine Gruppe von Striegelzinken) im Raum (z. B. mittels zumindest eines Beschleunigungssensors und/oder zumindest eines Drehratensensors), und/oder
- eine Fahrgeschwindigkeit (z. B. der Rahmenkonstruktion, insbesondere der Bodenbearbeitungsmaschine), und/oder
- eine Beschleunigung der Rahmenkonstruktion.

Die Erfassungseinrichtung kann zweckmäßig dazu eingerichtet sein, eine Vorspannkraft von zumindest einem Striegelzinken zu erfassen, wobei dies bspw. mittels einer Kraftsensorik (z.B. DMS, Kraftmesssensor, Kraftmessbolzen, und/oder dergl.) welche am Striegelzinken angebracht und als Stellgröße bspw. eine Verformung des Striegelzinken ermittelt, erfolgen kann. Alternativ oder ergänzend könnte die Erfassungseinrichtung zur Erfassung einer Vorspannkraft auch der Überlastsicherung und/oder der Vorspanneinrichtung zugeordnet sein und bspw. durch eine Wegmessensorik (z.B. Verfahrweg Vorspanneinrichtung) gebildet sein. Auch andere Arten von Sensorik und/oder Anordnungen zur Erfassung einer Vorspannkraft wären denkbar, respektive vorstellbar. Wobei zudem Angemerkt sei, dass alternativ oder ergänzend auch eine Arbeitstiefenmessung eingesetzt werden kann, wobei sich eine Arbeitstiefe und eine Vorspannkraft jeweils einander Bedingungen und somit bspw. die gleiche Sensorik sowohl zur Erfassung der Vorspannkraft als auch zur Erfassung der Arbeitstiefe Verwendung finden kann.

Die Erfassungseinrichtung kann bspw. durch einen oder mehrere Sensoren wie bspw. Winkelsensoren, Kraftsensoren (z.B. DMS-Sensoren), Drucksensoren und/oder dergl. gebildet sein.

Zur gleichmäßigen Höhenführung der Bodenbearbeitungsmaschine entlang einer Bodenfläche (z.B. Ackerfläche) können an dieser, respektive der Rahmenkonstruktion, Stützräder angebaut sein, welche Stützräder zudem höhenverstellbar gegenüber der Rahmenkonstruktion sein können. Gemäß einer Weiterbildung der Erfindung kann vorgesehen sein, dass Anhand einer, mittels bspw. Stützrädern veränderbaren, Höhenlage der Bodenbearbeitungsmaschine, respektive der Rahmenkonstruktion, wiederum die Vorspanneinrichtungen entsprechend angesteuert werden, um somit unabhängig von der Höhenlage dennoch eine gewünschte Vorspannkraft und/oder Arbeitstiefe einhalten zu können. Wobei die Vorgabe der jeweiligen Höhenlage wiederum manuell und/oder automatisiert (z.B. mittels Sensorik) erfolgen kann und die Höhenlage wiederum als Stellgröße für die Vorspanneinrichtung verwendet werden kann.

Um ein gewünschtes Arbeitsergebnis mittels der Bodenbearbeitungsmaschine, vorzugsweise mittels des Hackstriegel zu erreichen, kann gemäß einer Weiterbildung der Erfindung vorgesehen sein, dass zumindest einer ersten Gruppe von Striegelzinken und/oder zumindest einer zweiten Gruppe von Striegelzinken zumindest eine Überwachungseinrichtung zur Erfassung einer Stellgröße für die erste Vorspanneinrichtung und/oder die zweite Vorspanneinrichtung zugeordnet ist, wobei die Überwachungseinrichtung dazu eingerichtet ist, ein Arbeitsergebnis der Gruppe von Striegelzinken, insbesondere einen Verschüttungsgrad zu erfassen und/oder das vorhanden sein einer Reihe von Nutzpflanzen (d.h. eine Reihenkultur) zu erfassen. Anhand der mittels der Überwachungseinrichtung erfassten Stellgröße kann somit die Vorspannkraft erhöht werden oder verringert werden oder zumindest weitgehend gleich beibehalten werden

Die Überwachungseinrichtung kann zweckmäßig bspw. durch zumindest eine Kamera, einen Infrarotsensor, einen Laserscanner, einen Ultraschalsensor und/oder dergl. gebildet sein.

Der Verschüttungsgrad kann darüber hinaus auch ein Erfassen mit umfassen wieviel Unkraut sich nach einer Arbeit mit dem Hackstriegel noch auf der Ackerfläche befindet.

Um ein homogenes Arbeitsbild mit der Bodenbearbeitungsmaschine zu erreichen, kann gemäß einer Weiterbildung der Erfindung vorgesehen sein, dass die erste Vorspanneinrichtung und die zweite Vorspanneinrichtung derartig zueinander verstellbar sind, dass die Vorspannkraft und/oder die Arbeitstiefe der zumindest einen ersten Gruppe von Striegelzinken zumindest weitgehend gleich ist zur Vorspannkraft und/oder Arbeitstiefe der zumindest einen zweiten Gruppe von Striegelzinken. Alternativ oder ergänzend kann auch vorgesehen sein, dass die Vorspannkraft und/oder Arbeitstiefe der zumindest einen ersten Gruppe von Striegelzinken einen definierten und/oder definierbaren Differenzwert zur Vorspannkraft und/oder Arbeitstiefe der zumindest einen zweiten Gruppe von Striegelzinken aufweist.

Wobei diese Differenzkraft und/oder Arbeitstiefe wiederum mittels einer Erfassungseinrichtung entsprechend überwacht werden kann.

Um eine gleiche Vorspannkraft und/oder Arbeitstiefe mit den zwei Vorspanneinrichtungen zu erreichen oder einen definierten und/oder definierbaren Differenzwert der Vorspannkraft und/oder Arbeitstiefe zu erreichen, kann vorgesehen sein, dass die Ansteuerung dieser mittels einer Steuereinrichtung erfolgt, wobei dieser Steuereinrichtung zumindest ein Druckregelventil zugeordnet sein kann.

Um eine für Reihenkulturen flexibel einsetzbare und auf Reihenabstände von Reihenkulturen abgestimmte Bodenbearbeitungsmaschine zu schaffen, kann gemäß einer Weiterbildung der Erfindung vorgesehen sein, dass diese zumindest zwei erste Gruppen von Striegelzinken und/oder zumindest zwei zweite Gruppen von Striegelzinken aufweist, welche eine Arbeitsbreite aufweisen welche maximal 25cm und/oder maximal 35 cm und/oder maximal 50cm und/oder maximal 80cm und/oder maximal 100cm beträgt. Alternativ oder ergänzend kann vorgesehen sein, dass die zumindest zwei ersten Gruppen von Striegelzinken eine andere Arbeitsbreite aufweisen als die zumindest zwei zweiten Gruppen von Striegelzinken, insbesondere auf Reihenabstände einer Reihenkultur angepasste Arbeitsbreiten. D.h. dass bspw. eine Gruppe eine Arbeitsbreite aufweist welche im Wesentlichen einer Breite der Reihenkultur entspricht und die andere Gruppe eine Arbeitsbreite aufweist welche im Wesentlichen einer Breite zwischen zwei Reihenkulturen entspricht.

Gemäß einer Weiterbildung der Erfindung ist es möglich, dass die zumindest zwei Gruppen von Striegelzinken derartig ausgeführt sind, dass deren Arbeitsbreite veränderbar ist, bspw. mittels entsprechenden Koppelelementen oder dergl., so dass für verschiedene Reihenabstände von Reihenkulturen jeweils eine erforderliche Arbeitsbreite erreicht wird. Somit wäre es bspw. auch denkbar, dass eine Zuteilung von Striegelzinken möglich wird, zu welcher Gruppe von Striegelzinken diese gehören sollen.

Es ist möglich, dass die zumindest eine erste Gruppe von Striegelzinken und die zumindest eine zweite Gruppe von Striegelzinken im Wesentlichen einen gleichen Aufbau aufweisen und insbesondere eine im Wesentlichen gleiche Anzahl an Striegelzinken und/oder eine im Wesentlichen gleiche Anordnung an Striegelzinken aufweisen.

Die zumindest eine erste Gruppe von Striegelzinken und/oder die zumindest eine zweite Gruppe von Striegelzinken können jeweils einer Teilbreite entsprechend und bspw. eine Arbeitsbreite von maximal 4 Meter und/oder maximal 3 Meter und/oder maximal 1 Meter aufweisen. Wobei die Bodenbearbeitungsmaschine auch eine Vielzahl derartiger Teilbreiten aufweisen, d.h. umfassen kann.

Um mittels der Bodenbearbeitungsmaschine auch sog. Section-Control Anwendungen durchführen zu können, kann gemäß einer Weiterbildung der Erfindung vorgesehen sein, dass diese ein Positionsbestimmungssystem (z.B. Satelliten gestütztes Positionsbestimmungssystem wie bspw. GPS-System oder RTK-System oder dergl.) umfasst (z.B. mit einem derartigen signalverbunden und/oder signalverbindbar ist) und das zumindest eine erste Vorspanneinrichtung und/oder zweite Vorspanneinrichtung basierend auf vom Positionsbestimmungssystem bestimmten Positionen von zumindest einer erste Gruppe von Striegelzinken und/oder zumindest einer zweiten Gruppe von Striegelzinken angesteuert werden.

Gemäß einer alternativen oder ergänzenden Ausführungsvariante kann vorgesehenen sein, dass die erste Vorspanneinrichtung und/oder die zweite Vorspanneinrichtung anhand einer Position von zumindest einer erste Gruppe von Striegelzinken und/oder zumindest einer zweite Gruppe von Striegelzinken derartig angesteuert werden, dass diese ausgehoben und/oder abgesenkt und in Bodenkontakt gebracht werden und/oder deren Vorspannkraft verändert wird und/oder deren Arbeitstiefe verändert wird. Wobei dies alternativ oder ergänzend insbesondere Anhand einer Ackerschlagkarte (z.B. Kartographie, Ackerschlagkartei, etc.) erfolgen kann, d.h. dass Anhand der Ackerschlagkarte definiert wird an welcher Position einer Ackerfläche die Striegelzinken ausgehoben und/oder abgesenkt und in Bodenkontakt gebracht werden müssen und/oder welche Vorspannkraft und/oder Arbeitstiefe diese an welcher Position einer Ackerfläche aufweisen müssen.

Es ist möglich, dass die erste Vorspanneinrichtung und die zweite Vorspanneinrichtung jeweils über Überlastsicherungen mit den Striegelzinken gekoppelt sind und/oder die jeweiligen Striegelzinken jeweils eine eigene Überlastsicherung umfassen. Dadurch kann z. B. ermöglicht werden, dass eine Krafteinstellung (z. B. Vorspannkraft) der Striegelzinken über eine Vorspannung (z. B. Vorspannkraft) der jeweiligen Überlastsicherungen veränderbar ist und/oder eine Krafteinstellung (z. B. Vorspannkraft) und/oder ein Striegelwinkel der jeweiligen Striegelzinken unabhängig voneinander einstellbar sind.

Die Striegelzinken können z. B. jeweils eine eigene (vorzugsweise aus Kunststoff und/oder Metall) ausgebildete Montagevorrichtung umfassen, mittels der sie an dem Träger oder den Trägern drehbar (z. B. schwenkbar) gelagert sind. Dadurch kann z. B. ermöglicht werden, dass die jeweiligen Striegelzinken (z. B. von ein und demselben Träger, von unterschiedlichen Trägern, von der ersten Gruppe von Striegelzinken und/oder von der zweiten Gruppe von Striegelzinken) unabhängig voneinander an eine Bodenkontur anpassbar sind.

Die jeweilige Montagevorrichtung kann z. B. zur Montage des jeweiligen Striegelzinkens sowie zur Montage an den zugehörigen Träger ausgebildet sein.

Es ist möglich, dass die jeweilige Montagevorrichtung die Schwenkbarkeit (z. B. Drehbarkeit) der Striegelzinken definiert und/oder ermöglicht.

Die Bodenbearbeitungsmaschine kann z. B. eine vorzugsweise motorisierte Höhenverstellungsvorrichtung aufweisen, um eine Höhe der Rahmenkonstruktion automatisiert zu verstellen. Die Höhenverstellungsvorrichtung kann z. B. eine relative Lage von zumindest einem Stützrad der Bodenbearbeitungsmaschine zur Rahmenkonstruktion verstellen.

Zumindest eine Erfassungseinrichtung kann dazu eingerichtet sein, mittelbar (z.B. mittels Zwischenglieds, Zusatzbaugruppe oder dergl.) oder unmittelbar (z.B. direkt, ohne Zusatzbaugruppe) eine Stellgröße für die Höhenverstellungsvorrichtung zu erfassen (z.B. detektieren, ermitteln, messen), wobei dies insbesondere eines von folgendem umfassen kann:
- eine Arbeitstiefe von zumindest einem Striegelzinken (z.B. einer ersten Gruppe und/oder einer zweiten Gruppe von Striegelzinken) und/oder
- eine Vorspannkraft von zumindest einem Striegelzinken (z.B. eine Kraft mit der zumindest ein Striegelzinken entlang einer Bodenfläche geführt wird) und/oder
- eine Beschleunigung von zumindest einem Striegelzinken (vorzugsweise Frequenz dessen Schwenkbewegungen, z. B. wenn er entlang Bodenfläche bewegt wird),
- eine Winkellage von zumindest einem Striegelzinken (z.B. ein Winkel von zumindest einem Striegelzinken gegenüber der Rahmenkonstruktion und/oder einer Bodenfläche, vorzugsweise Frequenz dessen Schwenkbewegungen, z. B. wenn er entlang Bodenfläche bewegt wird) und/oder
- eine Lage der Rahmenkonstruktion (z.B. eine Winkellage und/oder ein Abstand der Rahmenkonstruktion gegenüber einer Bodenfläche und/oder eine Lage der Rahmenkonstruktion gegenüber zumindest einen Striegelzinken oder eine Gruppe von Striegelzinken) im Raum (z. B. mittels zumindest eines Beschleunigungssensors und/oder zumindest eines Drehratensensors), und/oder
- eine Fahrgeschwindigkeit (z. B. der Rahmenkonstruktion, insbesondere der Bodenbearbeitungsmaschine), und/oder
- eine Beschleunigung der Rahmenkonstruktion.

Die Bodenbearbeitungsmaschine kann z. B. eine Vielzahl an Trägern aufweisen, an denen die Striegelzinken vorzugsweise drehbar gelagert sein können, wobei die Träger vorzugsweise im Wesentlichen parallel zueinander und/oder hintereinander angeordnet sein können.

Es ist möglich, dass die Bodenbearbeitungsmaschine sich aus einem Mittelteil und mittels Schwenkachsen schwenkbar am Mittelteil gelagerten Seitenteilen zusammensetzt und vorzugsweise die Seitenteile und/oder das Mittelteil um die Schwenkachsen z. B. in eine Transportposition verschwenkbar ist.

Es ist möglich, dass mit der ersten Vorspanneinrichtung und/oder der zweiten Vorspanneinrichtung jeweils eine Drehbewegung auf einen jeweiligen Schwenkhebel übertragbar ist, wobei z. B. zumindest zwei Schwenkhebel im Wesentlichen koaxial zueinander ausgerichtet sein können.

Der ersten Gruppe von Striegelzinken kann z. B. ein erster Schwenkhebel zugeordnet sein und der zweiten Gruppe von Striegelzinken kann z. B. ein zweiter Schwenkhebel zugeordnet sein. Der erste Schwenkhebel und der zweite Schwenkhebel können z. B. im Wesentlichen koaxial zueinander angeordnet sein.

Es ist möglich, dass z. B. mit den Schwenkhebeln jeweils Verbindungselemente (z. B. Seile, insbesondere Drahtseile) zur Koppelung mit den jeweiligen Überlastsicherungen derartig verbunden sein können, dass vorzugsweise anhand einer Drehlage der Schwenkhebel die Drehlage der Striegelzinken und somit insbesondere deren Vorspannkraft und/oder deren Arbeitstiefe verstellt werden kann.

Es ist möglich, dass ein oder mehrere Tragbalken der Rahmenkonstruktion, der Träger oder die Träger und/oder die Schwenkhebel vorzugsweise quer (insbesondere im Wesentlichen rechtwinklig) zur Fahrt- und/oder Arbeitsrichtung der Bodenbearbeitungsmaschine ausgerichtet sein können. Alternativ oder ergänzend können sich z. B. der eine oder die mehreren Tragbalken der Rahmenkonstruktion, der Träger oder die Träger und/oder die Schwenkhebel in im Wesentlichen parallelen Ebenen erstrecken.

Alternativ oder ergänzend können die erste Vorspanneinrichtung und die zweite Vorspanneinrichtung, die Verbindungselemente und/oder die Überlastsicherungen z. B. in im Wesentlichen parallel zur Fahrt- und/oder Arbeitsrichtung der Bodenbearbeitungsmaschine verlaufenden Ebenen ausgerichtet sein.

Die Bodenbearbeitungsmaschine kann z. B. eine Arbeitsbreite von 6 Meter oder mehr aufweisen.

Die erste Vorspanneinrichtung und die zweite Vorspanneinrichtung können insbesondere an der Rahmenkonstruktion montiert sein, vorzugsweise an einem vorzugsweise quer (insbesondere im Wesentlichen rechtwinklig) zur Fahrt- und/oder Arbeitsrichtung der Bodenbearbeitungsmaschine ausgerichteten Tragbalken der Rahmenkonstruktion. Der Tragbalken kann z. B. im Wesentlichen parallel zu den Schwenkhebeln und/oder dem Träger oder den Trägern ausgerichtet sein.

Der ersten Gruppe von Striegelzinken und der zweiten Gruppe von Striegelzinken kann z. B. jeweils zumindest eines von folgendem zugeordnet sein: zumindest ein Sensor zur Erfassung von (insbesondere vom Boden verursachten) Beschleunigungen und/oder Bewegungen (z. B. verändernde Winkellagen) eines der Striegelzinken, zumindest ein Sensor zur Erfassung einer Winkellage eines der Striegelzinken und/oder zumindest ein Zugsensor für eines der Verbindungselemente (insbesondere zum Erfassen einer Spannung, Kraft und/oder Dehnung des Verbindungselements).

Es ist möglich, dass die Bodenbearbeitungsmaschine zumindest eines von folgendem umfasst: zumindest einen Sensor (z. B. Ultraschallsensor) zum Erfassen einer Lage (z. B. Winkellage) der Rahmenkonstruktion im Raum und/oder einer Position der Rahmenkonstruktion relativ zum Boden (z. B. Abstand zwischen Rahmenkonstruktion und Boden) und/oder zumindest einen Drucksensor für die erste Vorspanneinrichtung (insbesondere deren Hydraulik- oder Pneumatikzylinder) und zumindest einen Drucksensor für die zweite Vorspanneinrichtung (insbesondere deren Hydraulik- oder Pneumatikzylinder).

Es ist möglich, dass eine Steuereinrichtung dazu eingerichtet ist, um die erste Vorspanneinrichtung und/oder die zweite Vorspanneinrichtung mittels Parametern, die von dem einen oder den mehreren wie hierin offenbarten Sensoren und/oder der zumindest einen Erfassungseinrichtung (z. B. als Stellgrößen) erfasst werden, zu steuern.

Es ist im Kontext der Erfindung z. B. möglich, dass eine Vorspannkraft (z. B. Krafteinstellung und/oder Vorspannung) eines Striegelzinkens z. B. durch eine Arbeitstiefe und/oder Winkellage des Striegelszinkens charakterisiert werden kann oder umgekehrt.

Im Kontext der Erfindung umfasst der Begriff Steuereinrichtung, insbesondere die Gesamtheit der Bauteile zur Signal- und/oder Befehlsübertragung, bspw. einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann. Auch ein BUSSystem kann hierbei mit eingesetzt werden. Dementsprechend auch Rechnereinheiten, CPU's und/oder dergl. Ebenso umfasst sind entsprechend auch in den jeweiligen Sensoren, oder Sensoreinheiten, oder Sensoranordnungen integrierte Datenverarbeitungseinrichtungen. Ebenso sei darauf hingewiesen, dass die Sensoren / Messeinrichtungen / Erfassungseinrichtungen etc. jeweils als Rückkoppelung für eine Steuer- und/oder Regelgröße herangezogen werden können.

Es sei noch darauf hingewiesen, dass die Begriffe "Steuern" und "Regeln", respektive "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit der Bodenbearbeitungsmaschine offenbarte Merkmale auch Verfahrensgemäß offenbart gelten und beanspruchbar sein. Die vorgenannten Aspekte und erfindungsgemäßen Merkmale und Ausführungsvarianten, insbesondere im Hinblick auf die Bodenbearbeitungsmaschine gelten somit auch für das Verfahren und sind in beliebiger Weise und Frei miteinander kombinierbar. In umgekehrter Weise gilt das gleiche, so dass auch alle Aspekte, erfindungsgemäße Merkmale und Ausführungsvarianten die im Zusammenhang mit dem Verfahren offenbart sind, demnach auch für die Bodenbearbeitungsmaschine offenbart und entsprechend beanspruchbar sind.

Die Erfindung umfasst zur Lösung der Aufgaben zudem ein Verfahren zum Einstellen einer Vorspannkraft von Striegelzinken an einem Hackstriegel.

Das Verfahren umfasst ein Bereitstellen einer landwirtschaftlichen Bodenbearbeitungsmaschine wie hierin offenbart, insbesondere einer Bodenbearbeitungsmaschine nach zumindest einem der Ansprüche 1 bis 18.

Das Verfahren umfasst eine Definition (z.B. durch eine Bedienperson und/oder automatisiert mittels einer Steuereinrichtung) einer Ist-Lage (z.B. Ist-Vorspannkraft und/oder Ist-Arbeitstiefe, z.B. mittels einer Erfassungseinrichtung und/oder manuell durch eine Bedienperson) und einer Differenz zu einer Soll-Lage (z.B. einer Soll-Vorspannkraft) einer ersten Gruppe von Striegelzinken. D.h. es wird bspw. definiert (z.B. ermittelt, erfasst) welche Vorspannkraft die Striegelzinken einer ersten Gruppe von Striegelzinken aufweisen und welche Vorspannkraft gewünscht ist.

Das Verfahren umfasst zudem eine Definition (z.B. durch eine Bedienperson und/oder automatisiert mittels einer Steuereinrichtung) einer Ist-Lage (z.B. Ist-Vorspannkraft und/oder Ist-Arbeitstiefe, z.B. mittels einer Erfassungseinrichtung und/oder manuell durch eine Bedienperson) und einer Differenz zu einer Soll-Lage (z.B. einer Soll-Vorspannkraft) einer zweiten Gruppe von Striegelzinken. D.h. es wird bspw. definiert (z.B. ermittelt, erfasst) welche Vorspannkraft die Striegelzinken einer zweiten Gruppe von Striegelzinken aufweisen und welche Vorspannkraft gewünscht ist.

Das Verfahren umfasst zudem eine unabhängige Ansteuerung einer die Vorspannkraft einer ersten Gruppe von Striegelzinken beeinflussenden ersten Vorspanneinrichtung zu einer Ansteuerung einer die Vorspannung einer zweiten Gruppe von Striegelzinken beeinflussenden zweiten Vorspanneinrichtung. Die Ansteuerung kann hierbei manuell durch eine Bedienperson erfolgen und/oder automatisiert mittels einer Steuereinrichtung erfolgen.

Gemäß einer Weiterbildung des Verfahren kann vorgesehen sein, dass die Bodenbearbeitungsmaschine ein Positionsbestimmungssystem (z.B. Satelliten gestütztes Positionsbestimmungssystem wie bspw. GPS-System oder RTK-System oder dergl.) umfasst und das zumindest eine erste Vorspanneinrichtung und/oder zweite Vorspanneinrichtung basierend auf vom Positionsbestimmungssystem bestimmten Positionen von zumindest einer erste Gruppe von Striegelzinken und/oder zumindest einer zweiten Gruppe von Striegelzinken angesteuert werden.

Gemäß einer Weiterbildung des Verfahren kann vorgesehen sein, dass die erste Vorspanneinrichtung und die zweite Vorspanneinrichtung derartig zueinander verstellbar sind, dass die Vorspannkraft und/oder die Arbeitstiefe der zumindest einen ersten Gruppe von Striegelzinken zumindest weitgehend gleich ist zur Vorspannkraft und/oder Arbeitstiefe der zumindest einen zweiten Gruppe von Striegelzinken. Alternativ oder ergänzend kann auch vorgesehen sein, dass die Vorspannkraft und/oder Arbeitstiefe der zumindest einen ersten Gruppe von Striegelzinken einen definierten und/oder definierbaren Differenzwert zur Vorspannkraft und/oder Arbeitstiefe der zumindest einen zweiten Gruppe von Striegelzinken aufweist.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Bodenbearbeitungsmaschine, vorzugsweise eines landwirtschaftlichen Hackstriegel,
- Figur 2A: eine Perspektivansicht einer stark vereinfachten Bodenbearbeitungsmaschine gemäß der Figur 1,
- Figur 2B: eine Draufsicht einer Bodenbearbeitungsmaschine gemäß der Figur 2A,
- Figur 2C: eine Seitenansicht einer Bodenbearbeitungsmaschine gemäß der Figur 2A.

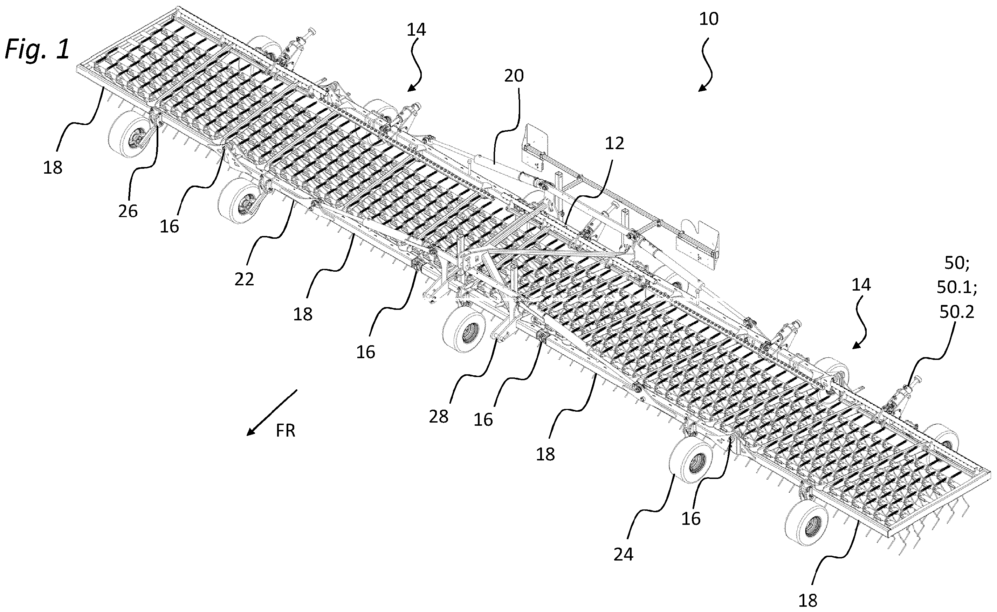

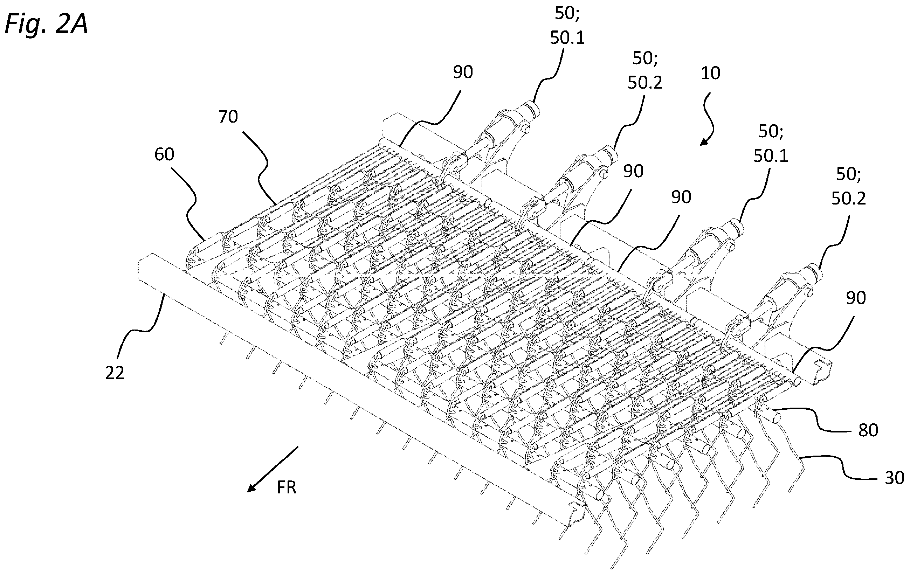

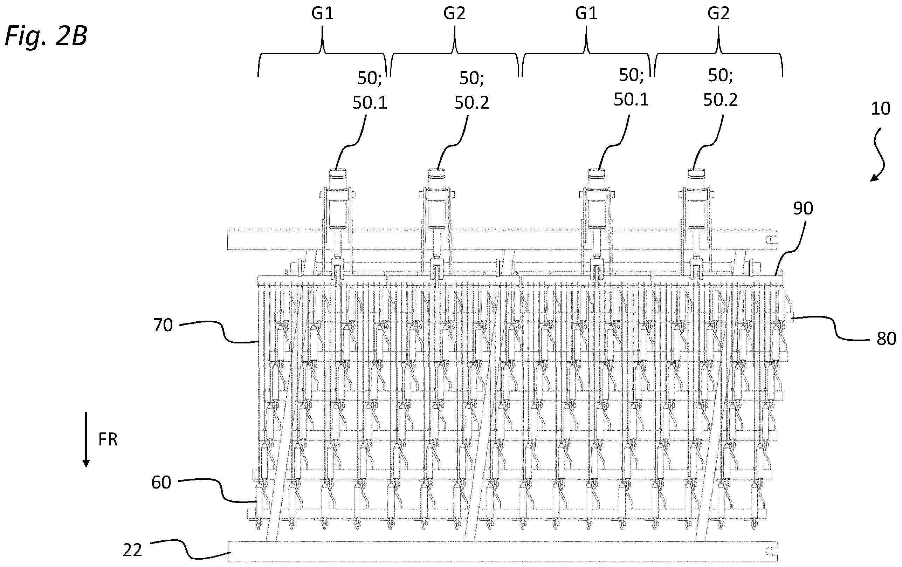

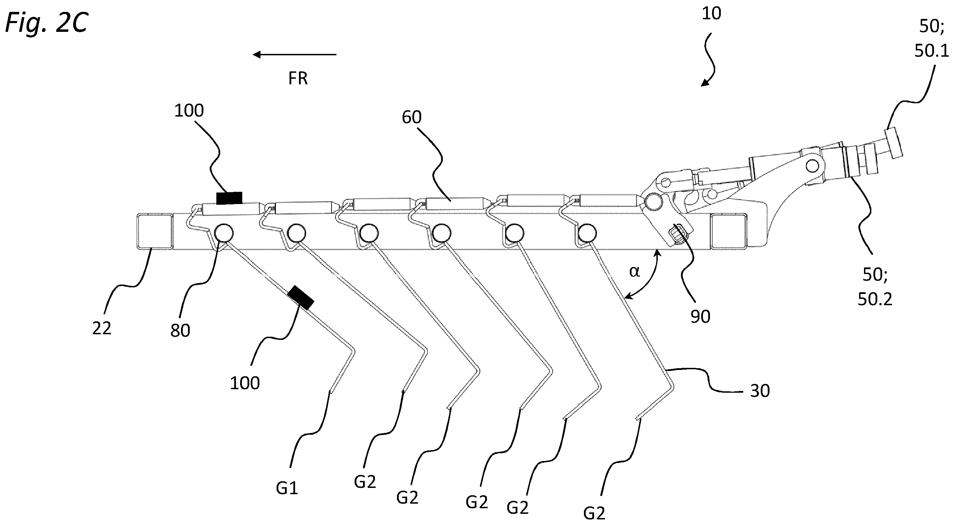

Die in den Figuren 1 und 2 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße Bodenbearbeitungsmaschine und das erfindungsgemäße Verfahren ausgestaltet und ausgeführt sein können und stellen keine abschließende Begrenzung dar.

Figur 1 zeigt eine Ausführungsvariante einer erfindungsgemäßen Bodenbearbeitungsmaschine 10, in Form eines Hackstriegel 10. Die Bodenbearbeitungsmaschine 10 ist als Hackstriegel 10 ausgeführt und dient insbesondere zur mechanischen Unkrautbekämpfung. Der Hackstriegel 10 könnte jedoch auch zur sog. Stoppelbearbeitung eingesetzt werden.

Die Bodenbearbeitungsmaschine 10 erstreckt sich in einer großen Arbeitsbreite (z.B. 6 Meter, 9 Meter, 12 Meter, 18 Meter oder auch mehr) quer zur Fahrtrichtung FR. Die Bodenbearbeitungsmaschine 10 setzt sich aus einem Mittelteil 12 und rechts und links am Mittelteil 12 mittels Schwenkachsen 16 (z.B. welche Schwenkachsen 16 in Fahrtrichtung FR und/oder aufrecht orientiert sind) schwenkbar am Mittelteil 12 gelagerten Seitenteilen 14 zusammen. Darüber hinaus setzen sich die Seitenteile 14 aus zwei Segmenten 18 zusammen, welche wiederum mittels Schwenkachsen 16 schwenkbar zueinander gelagert sind.

Um eine, für eine Straßenfahrt zulässige Transportbreite (z.B. 3 Meter in Deutschland) zu erreichen ist vorgesehen, dass die Seitenteile 14 gegenüber dem Mittelteil 12 verschwenkt (z.B. um 90°) werden können und das die zwei ein Seitenteil 14 bildenden Segmente 18 zueinander (z.B. um 180°) verschwenkt werden können, wobei hierfür bspw. hydraulisch betätigte Stellantriebe 20 (z.B. Linearantriebe wie bspw. Hydraulikzylinder) vorgesehen sind.

Zum Tragen der Komponenten der Bodenbearbeitungsmaschine 10 umfasst diese eine Rahmenkonstruktion 22. Der Rahmenkonstruktion 22 sind darüber hinaus sog. Stützräder 24 zugeordnet, welche dazu eingerichtet sind, die Rahmenkonstruktion 22 und somit die Bodenbearbeitungsmaschine mit einem gleichbleibenden Abstand entlang einer Bodenfläche (z.B. Ackerfläche) zu führen.

Um eine Höhenlage der Rahmenkonstruktion 22 gegenüber einer Bodenfläche zu verändern, ist zudem vorgesehen, dass die Stützräder 24 in deren Höhe, d.h. in deren Lage, gegenüber der Rahmenkonstruktion 22 verstellbar sind, wobei dies gemäß der Ausführungsbeispiele mit Hilfe einer Lochkulisse 26 erfolgt, es wären jedoch auch andere Verstellmöglichkeiten denkbar und einsetzbar.

Die Bodenbearbeitungsmaschine 10 gemäß der Ausführungsbeispiele ist als eine an einem Zugfahrzeug (hier nicht dargestellt) angebaute Bodenbearbeitungsmaschine 10 ausgeführt, wobei hierfür der Rahmenkonstruktion 22 eine sog. 3-Punkt-Anhängung 28 zugeordnet ist. Es wären jedoch auch andere Formen der Anhängung denkbar sowie andere Ausführungsvarianten von Bodenbearbeitungsmaschinen 10 denkbar, bspw. mittels eines Zugfahrzeug und ein Fahrwerk aufweisende gezogene Bodenbearbeitungsmaschinen 10 oder selbstfahrende Bodenbearbeitungsmaschinen 10. Die Bodenbearbeitungsmaschine 10 könnte zudem als eine autonome (z.B. teilautonom oder vollautonom) Bodenbearbeitungsmaschine 10 ausgeführt sein.

Weitere Details der Erfindung gehen aus der Perspektivansicht der Figur 2A, der Draufsicht der Figur 2B sowie der Seitenansicht der Figur 2C hervor. Gezeigt ist jeweils eine stark vereinfachte Bodenbearbeitungsmaschine 10 wie sie bspw. in einer Bodenbearbeitungsmaschine 10, respektive einem Hackstriegel 10, gemäß der Figur 1 eingesetzt werden kann. Es sei darauf hingewiesen, dass die Striegelzinken 30 gemäß der Figur 2C nicht mit einer Bodenoberfläche in Kontakt stehen um somit die Auswirkungen unterschiedlicher auf die Striegelzinken 30 wirkenden Vorspannkräfte entsprechend darstellen zu können.

Die Bodenbearbeitungsmaschinen 10 umfassen eine Rahmenkonstruktion 22 mit einer Mehrzahl von nebeneinander und in mehreren Reihen hintereinander angeordneten Striegelzinken 30, welche jeweils schwenkbar (z.B. drehbar) gegenüber der Rahmenkonstruktion 22 gelagert sind und jeweils mit einer Vorspanneinrichtung 50 gekoppelt sind.

Die Koppelung der Striegelzinken 30 mit der Vorspanneinrichtung 50 erfolgt mit einer Überlastsicherung 60 in Form einer mechanischen Federeinrichtung (z.B. eine oder mehrere Schraubendruckfeder(n) und/oder Schraubenzugfeder(n)) welche wiederum jeweils mit bspw. einem Drahtseil 70 oder dergl. Verbindungselement mit der Vorspanneinrichtung 30 gekoppelt sind.

Die Striegelzinken 30 sind in zumindest eine erste Gruppe G1 von Striegelzinken 30 mit einer ersten Vorspanneinrichtung 50.1 und zumindest eine zweite Gruppe G2 von Striegelzinken 30 mit einer zweiten Vorspanneinrichtung 50.2 unterteilt. Gemäß der Ausführungsbeispiele jedoch jeweils in zwei erste Gruppen G1 und zwei zweite Gruppen G2 von Striegelzinken 30 unterteilt, wobei hierbei auch eine andere Aufteilung denkbar wäre oder auch mehr Gruppen von Striegelzinken 30 denkbar wären.

Die erste Gruppe G1 von Striegelzinken 30 und die zweite Gruppe G2 von Striegelzinken 30 umfassen jeweils eine erste Vorspanneinrichtung 50.1 respektive eine zweite Vorspaneinrichtung 50.2, wobei die erste Vorspanneinrichtung 50.1 unabhängig von der zweiten Vorspanneinrichtung 50.2 verstellbar ist, so dass die Striegelzinken 30 der ersten Gruppe G1 eine andere Einstellung (z.B. Vorspannkraft und/oder Arbeitstiefe) aufweisen können als die Striegelzinken 30 der zweiten Gruppe G2.

Gemäß der Ausführungsbeispiele sind die Striegelzinken 30 jeweils drehbar (z.B. gegenüber der Rahmenkonstruktion 22) und nebeneinander an einem Träger 80 gelagert, wobei der Träger 80 somit jeweils eine Reihe bildet und wobei die Bodenbearbeitungsmaschine 10 gemäß der Ausführungsbeispiele 6 hintereinander angeordnete Träger 80, respektive Reihen aufweist. Es wäre jedoch auch eine andere Anzahl an Träger 80 respektive Reihen denkbar.

Es sei darauf hingewiesen, dass es auch denkbar wäre, dass die Striegelzinken 30 an einem Träger 80 gelagert sind (z.B. drehbar gelagert sind, drehfest gelagert sind) und der Träger 80 drehbar oder drehfest (z. B. undrehbar) und/oder höhenverstellbar gegenüber der Rahmenkonstruktion 22 an der Rahmenkonstruktion 22 gelagert ist.

Erfindungsgemäß kann vorgesehen sein, dass die zumindest eine erste Gruppe G1 von Striegelzinken 30 und/oder die zumindest eine zweite Gruppe G2 von Striegelzinken 30 eine Mehrzahl von nebeneinander an einem Träger 80 gelagerten Striegelzinken 30 umfasst, so dass bspw. eine Reihe von Striegelzinken 30 bspw. eine erste Gruppe G1 oder eine zweite Gruppe G2 bildet, was gemäß der Figur 2C durch die verschiedenen Lagen der Striegelzinken 30 an den Trägern 80 angedeutet werden soll, dementsprechend sind 6 Gruppen von Striegelzinken 30 vorhanden welche wiederum jeweils in eine erste Gruppe G1 oder eine zweite Gruppe G2 eingeteilt bzw. aufgeteilt werden können.

Gemäß der Figuren 2A und 2B ist vorgesehen, dass die erste Gruppe G1 von Striegelzinken 30 und die zweite Gruppe G2 von Striegelzinken 30 jeweils eine Mehrzahl von nebeneinander an einem Träger 80 gelagerte Striegelzinken 30 umfasst und eine Mehrzahl von an zumindest zwei (z.B. im Ausführungsbeispiel 6) hintereinander angeordneten Trägern 80 gelagerte Striegelzinken 30.

Jede Gruppe G1; G2 von Striegelzinken 30 umfasst eine Vorspanneinrichtung 50, bspw. eine erste Vorspanneinrichtung 50.1 und/oder eine zweite Vorspanneinrichtung 50.2. Mit der Vorspanneinrichtung 50 wird jeweils eine Drehbewegung auf einen Schwenkhebel 90 übertragen mit welchem jeweils die Drahtseile 70 zur Koppelung mit der Überlastsicherung 60 derartig verbunden sind, dass Anhand einer Drehlage des Schwenkhebel 90 die Drehlage der Striegelzinken 30 und somit deren Vorspannkraft und/oder deren Arbeitstiefe verstellbar ist.

Die Vorspanneinrichtung 50 ist jeweils als eine motorische Stelleinrichtung gebildet, insbesondere durch einen hydraulisch betriebenen Zylinder gebildet. Es wären jedoch auch andere Arten und Ausführungsvarianten von motorischen Stelleinrichtungen denkbar, bspw. elektrisch und/oder pneumatisch betriebene Aktoren, Motoren oder dergl.

Die Vorspanneinrichtung 50 kann einfachwirkend sein und bspw. durch einen einfachwirkenden Hydraulikzylinder oder Pneumatikzylinder gebildet sein, die Vorspanneinrichtung 50 kann alternativ oder ergänzend doppeltwirkend sein und bspw. durch einen doppeltwirkenden Hydraulikzylinder oder Pneumatikzylinder gebildet sein, gemäß der Ausführungsbeispiele werden jeweils doppeltwirkende Vorspanneinrichtungen 50; 50.1; 50.2 eingesetzt.

Zur Erfassung einer Stellgröße für die Vorspaneinrichtung 50; 50.1; 50.2 kann eine Erfassungseinrichtung 100 vorgesehen sein. Insbesondere kann der ersten Gruppe G1 von Striegelzinken 30 und der zweiten Gruppe G2 von Striegelzinken 30 jeweils eine Erfassungseinrichtung 100 zugeordnet sein, vorzugsweise kann zweckmäßig die erste Vorspanneinrichtung 50.1 mit einer Erfassungseinrichtung 100 und die zweite Vorspanneinrichtung 50.2 mit einer Erfassungseinrichtung 100 wirktechnisch gekoppelt sein, bspw. mittels einer Steuereinrichtung mit dieser gekoppelt sein.

Die Erfassungseinrichtung 100 kann mittelbar eine Stellgröße für die Vorspanneinrichtung 50; 50.1; 50.2 erfassen, wobei hierfür die Erfassungseinrichtung bspw. der Überlastsicherung 60 zugeordnet sein kann. Die Erfassungseinrichtung 100 kann unmittelbar eine Stellgröße für die Vorspanneinrichtung 50; 50.1; 50.2 erfassen, wobei hierfür die Erfassungseinrichtung 100 bspw. einem Striegelzinken 30 zugeordnet oder mit diesem verbunden sein kann.

Die Erfassungseinrichtung 100 kann bspw. dazu eingerichtet sein, eine Arbeitstiefe von zumindest einem Striegelzinken 30 und/oder eine Vorspannkraft von zumindest einem Striegelzinken 30 (z.B. eine Kraft, mit der zumindest ein Striegelzinken 30 entlang einer Bodenfläche geführt wird) und/oder eine Winkellage α von zumindest einem Striegelzinken 30 und/oder eine Lage der Rahmenkonstruktion 22 im Raum zu erfassen.

Die Gruppen G1; G2 von Striegelzinken 30 gemäß der Ausführungsbeispiele weisen jeweils die gleiche Arbeitsbreite von bspw. 1 Meter auf und bilden somit insbesondere eine sog. Teilbreite, es wäre jedoch auch denkbar, dass diese unterschiedliche Arbeitsbreiten aufweisen, d.h. dass bspw. eine erste Gruppe G1 von Striegelzinken 30 eine andere Arbeitsbreite als bspw. eine zweite Gruppe G2 von Striegelzinken 30 aufweist. Es wären jedoch auch andere Arbeitsbreiten denkbar, bspw. derartige die auf Reihenabstände von Reihenkulturen abgestimmt sind und bspw. eine Arbeitsbreite von maximal 25cm und/oder maximal 35 cm und/oder maximal 50cm und/oder maximal 80cm und/oder maximal 100cm aufweisen. Wobei die Gruppen G1; G2 auch derartig ausgeführt sein können, dass deren Arbeitsbreite veränderbar ist, bspw. mittels entsprechenden Koppelelementen oder dergl., so dass für verschiedene Reihenabstände von Reihenkulturen jeweils eine erforderliche Arbeitsbreite erreicht werden kann.

Wie aus den Ausführungsbeispielen hervorgeht, weisen die ersten Gruppe G1 von Striegelzinken 30 und die zweite Gruppe G2 von Striegelzinken 30 jeweils einen gleichen Aufbau mit einer gleichen Anzahl Striegelzinken 30 und einer gleichen Anordnung der Striegelzinken 30 auf. Es wären jedoch auch verschiedene Aufbauten und Anordnungen denkbar.

Die Figuren zeigen insbesondere Ausführungsbeispiele, bei denen die erste Vorspanneinrichtung 50.1 und die zweite Vorspanneinrichtung 50.2 jeweils über Überlastsicherungen 60 mit den Striegelzinken 30 gekoppelt werden, wobei die jeweiligen Striegelzinken 30 jeweils zweckmäßig eine eigene Überlastsicherung 60 umfassen. Dadurch kann insbesondere ermöglicht werden, dass eine Krafteinstellung (z. B. Vorspannkraft) der Striegelzinken 30 über eine Vorspannung (z. B. Vorspannkraft) der jeweiligen Überlastsicherungen 60 veränderbar ist und z. B. eine Krafteinstellung (z. B. Vorspannkraft) und/oder ein Striegelwinkel der jeweiligen Striegelzinken 30 unabhängig voneinander eingestellt werden können.

Die Striegelzinken 30 können jeweils eine eigene vorzugsweise aus Kunststoff ausgebildete Montagevorrichtung (z. B. Adapterbauteil) umfassen, mittels der sie an dem zugehörigen Träger 80 drehbar (z. B. schwenkbar) gelagert werden können. Dadurch kann insbesondere ermöglicht werden, dass die jeweiligen Striegelzinken 30 von insbesondere ein und demselben Träger 80, von unterschiedlichen Trägern 80, von der ersten Gruppe G1 von Striegelzinken 30 und/oder von der zweiten Gruppe G2 von Striegelzinken 30 unabhängig voneinander an eine unterschiedliche Bodenkontur anpassbar sind. Die jeweiligen Montagevorrichtungen definieren und/oder ermöglichen die Schwenkbarkeit (z. B. Drehbarkeit) der Striegelzinken 30.

Besonders bevorzugt ist z. B., dass die Bodenbearbeitungsmaschine 10 eine Vielzahl an Trägern 80 aufweist, an denen die Striegelzinken 30 zweckmäßig mittels der Montagevorrichtungen drehbar gelagert sein können, wobei die Träger 80 im Wesentlichen parallel zueinander und/oder hintereinander angeordnet sein können.

Die Bodenbearbeitungsmaschine 10 umfasst vorzugsweise eine z. B. motorisierte Höhenverstellungsvorrichtung, um eine Höhe der Rahmenkonstruktion 22 automatisiert verstellen zu können. Die Höhenverstellungsvorrichtung kann z. B. eine relative Lage der Stützräder 24 zur Rahmenkonstruktion 22 verstellen. Die zumindest eine Erfassungseinrichtung 100 kann z. B. auch dazu eingerichtet sein, (z. B. mittelbar oder unmittelbar) eine Stellgröße für die Höhenverstellungsvorrichtung zu erfassen, z. B. eine Arbeitstiefe von zumindest einem Striegelzinken 30, eine Vorspannkraft (z. B. Krafteinstellung) von zumindest einem Striegelzinken 30 (z.B. eine Kraft, mit der zumindest ein Striegelzinken 30 entlang einer Bodenfläche geführt wird), eine Winkellage von zumindest einem Striegelzinken 30 (z.B. ein Winkel von zumindest einem Striegelzinken 30 gegenüber der Rahmenkonstruktion 22 und/oder einer Bodenfläche), eine Lage der Rahmenkonstruktion 22 (z.B. eine Winkellage und/oder ein Abstand der Rahmenkonstruktion 22 gegenüber einer Bodenfläche und/oder eine Lage der Rahmenkonstruktion 22 gegenüber zumindest einem Striegelzinken 30 oder einer Gruppe von Striegelzinken 30) im Raum (z. B. mittels zumindest eines Beschleunigungssensors und/oder zumindest eines Drehratensensors), eine Fahrgeschwindigkeit (z. B. der Bodenbeareitungsmaschine 10 und somit zweckmäßig der Rahmenkonstruktion 22), und/oder eine Beschleunigung der Rahmenkonstruktion 22.

Wie schon erwähnt können mit der ersten Vorspanneinrichtung 50.1 und der zweiten Vorspanneinrichtung 50.2 jeweils eine Drehbewegung auf einen jeweiligen Schwenkhebel 90 übertragen werden.

Insbesondere die Figuren 1, 2A und 2B zeigen z. B., dass der ersten Gruppe G1 von Striegelzinken 30 ein erster Schwenkhebel 90 zugeordnet sein kann und der zweiten Gruppe G2 von Striegelzinken 30 ein zweiter Schwenkhebel 90 zugeordnet sein kann. Der erste Schwenkhebel 90 und der zweite Schwenkhebel 90 können z. B. im Wesentlichen koaxial zueinander angeordnet sein. Mit den Schwenkhebeln 90 sind jeweils die Verbindungselemente 70 (z. B. Seile, insbesondere Drahtseile) zur Koppelung mit den jeweiligen Überlastsicherungen 70 verbunden, sodass vorzugsweise anhand einer Drehlage der Schwenkhebel 90 die Drehlage der Striegelzinken 30 und somit deren Vorspannkraft und/oder deren Arbeitstiefe verstellt werden kann.

Die Figuren zeigen auch, dass ein oder mehrere Tragbalken der Rahmenkonstruktion 22, die Träger 80 und/oder die Schwenkhebel 90 vorzugsweise quer, insbesondere im Wesentlichen rechtwinklig zur Fahrt- und/oder Arbeitsrichtung FR der Bodenbearbeitungsmaschine 10 ausgerichtet sind, wohingegen die erste Vorspanneinrichtung 50.1 und die zweite Vorspanneinrichtung 50.2, die Verbindungselemente 70 und/oder die Überlastsicherungen 60 vorzugsweise in im Wesentlichen parallel zur Fahrt- und/oder Arbeitsrichtung FR der Bodenbearbeitungsmaschine 10 verlaufenden Ebenen ausgerichtet sind.

Die erste Vorspanneinrichtung 50.1 und die zweite Vorspanneinrichtung 50.2 sind insbesondere an der Rahmenkonstruktion 22 montiert, vorzugsweise an einem vorzugsweise quer, insbesondere im Wesentlichen rechtwinklig zur Fahrt- und/oder Arbeitsrichtung FR der Bodenbearbeitungsmaschine 10 ausgerichteten Tragbalken der Rahmenkonstruktion 22, wobei der Tragbalken insbesondere im Wesentlichen parallel zu den Schwenkhebeln 90 und/oder den Trägern 80 ausgerichtet sein kann.

Zu erwähnen ist noch, dass der ersten Gruppe G1 von Striegelzinken 30 und der zweiten Gruppe G2 von Striegelzinken 30 vorzugsweise jeweils zumindest eines von folgendem zugeordnet sein kann: zumindest ein Sensor zur Erfassung von insbesondere vom Boden verursachten Beschleunigungen und/oder Bewegungen (z. B. verändernde Winkellagen) eines der Striegelzinken 30, zumindest ein Sensor zur Erfassung einer Winkellage eines der Striegelzinken 30 und zumindest ein Zugsensor für eines der Verbindungselemente 70 (insbesondere zum Erfassen einer Spannung, Kraft und/oder Dehnung des Verbindungselements 70). Des Weitern kann die Bodenbearbeitungsmaschine 10 zumindest eines von folgendem umfassen: zumindest einen Sensor (z. B. Ultraschallsensor) zum Erfassen einer Lage (z. B. Winkellage) der Rahmenkonstruktion 22 im Raum und/oder einer Position der Rahmenkonstruktion 22 relativ zum Boden (z. B. Abstand zwischen Rahmenkonstruktion 22 und Boden) und/oder zumindest einen Drucksensor für die erste Vorspanneinrichtung 50.1 (insbesondere Hydraulik- oder Pneumatikzylinder) und zumindest einen Drucksensor für die zweite Vorspanneinrichtung 50.2 (insbesondere Hydraulik- oder Pneumatikzylinder).

Die durch einen oder mehrere der zuvor erwähnten Sensoren und/oder durch die zumindest eine Erfassungseinrichtung 100 erfassten wie zuvor erwähnten Parameter werden (z. B. mittels einer Steuereinrichtung) vorzugsweise als zweckmäßige Stellgrößen zur Steuerung der ersten Vorspanneinrichtung 50.1 und/oder der zweiten Vorspanneinrichtung 50.2 genutzt.

Sensoren können z. B. als sogenannte Winkelpotentiometer ausgebildet sein.

### Bezugszeichenliste:

| | | | |
|---|---|---|---|
| 10 | Bodenbearbeitungsmaschine; Hackstriegel | 60 | Überlastsicherung |
| 12 | Mittelteil | 70 | Drahtseil |
| 14 | Seitenteil | 80 | Träger |
| 16 | Schwenkachse | 90 | Schwenkhebel |
| 18 | Segment | 100 | Erfassungseinrichtung |
| 20 | Stellantrieb | | |
| 22 | Rahmenkonstruktion | G1 | Erste Gruppe |
| 24 | Stützrad | G2 | Zweite Gruppe |
| 26 | Lochkulisse | | |
| 28 | 3-Punkt-Anhängung | α | Winkellage |
| 30 | Striegelzinken | FR | Fahrtrichtung und/oder Arbeitsrichtung |
| 50 | Vorspanneinrichtung | | |
| 50.1 | Erste Vorspanneinrichtung | | |
| 50.2 | Zweite Vorspanneinrichtung | | |

## Patentansprüche

1. Bodenbearbeitungsmaschine (10), nämlich ein landwirtschaftlicher Hackstriegel (10), mit einer Rahmenkonstruktion (22) und mit einer Mehrzahl von beabstandet nebeneinander und in mehreren Reihen hintereinander angeordneten Striegelzinken (30), welche Striegelzinken (30) schwenkbar gegenüber der Rahmenkonstruktion (22) gelagert sind und jeweils mit einer Vorspanneinrichtung (50; 50.1; 50.2) gekoppelt sind, **dadurch gekennzeichnet, dass** die Striegelzinken (30) in zumindest eine erste Gruppe (G1) von Striegelzinken (30) mit einer ersten Vorspanneinrichtung (50; 50.1) und zumindest eine zweite Gruppe (G2) von Striegelzinken (30) mit einer zweiten Vorspanneinrichtung (50; 50.2) unterteilt sind und die erste Vorspanneinrichtung (50; 50.1) unabhängig von der zweiten Vorspanneinrichtung (50; 50.2) verstellbar ist,
wobei die zumindest eine erste Gruppe (G1) von Striegelzinken (30) und die zumindest eine zweite Gruppe (G2) von Striegelzinken (30) eine Mehrzahl von nebeneinander an einem Träger (80) gelagerte Striegelzinken (30) umfasst.

2. Bodenbearbeitungsmaschine (10) nach Anspruch 1, **dadurch gekennzeichnet, dass**
- die Striegelzinken (30) drehbar an einem Träger (80) der Rahmenkonstruktion (22) gelagert sind, und/oder
- die Striegelzinken (30) an einem Träger (80) gelagert sind und der Träger (80) drehbar und/oder höhenverstellbar gegenüber der Rahmenkonstruktion (22) an der Rahmenkonstruktion (22) gelagert ist.

3. Bodenbearbeitungsmaschine (10) nach einem der vorhergehenden Ansprüche, **dadurch gekennzeichnet, dass** die zumindest eine erste Gruppe (G1) von Striegelzinken (30) und/oder die zumindest eine zweite Gruppe (G2) von Striegelzinken (30) eine Mehrzahl von an zumindest zwei hintereinander angeordneten Trägern (80) gelagerte Striegelzinken (30) umfasst.

4. Bodenbearbeitungsmaschine (10) nach einem der vorhergehenden Ansprüche, **dadurch gekennzeichnet, dass** die zumindest eine erste Gruppe (G1) von Striegelzinken (30) und/oder die zumindest eine zweite Gruppe (G2) von Striegelzinken (30) eine Mehrzahl von nebeneinander an einem Träger (80) gelagerte Striegelzinken (30) umfasst und eine Mehrzahl von an zumindest zwei hintereinander angeordneten Trägern (80) gelagerte Striegelzinken (30) umfasst.

5. Bodenbearbeitungsmaschine (10) nach einem der vorhergehenden Ansprüche, **dadurch gekennzeichnet, dass** die erste Vorspanneinrichtung (50; 50.1) und die zweite Vorspanneinrichtung (50; 50.2) jeweils über Überlastsicherungen (60) mit den Striegelzinken (30) gekoppelt sind und/oder die jeweiligen Striegelzinken (30) jeweils eine eigene Überlastsicherung (60) umfassen, wodurch vorzugsweise eine Krafteinstellung der Striegelzinken (30) über eine Vorspannung der jeweiligen Überlastsicherungen (60) veränderbar ist und/oder eine Krafteinstellung und/oder ein Striegelwinkel der jeweiligen Striegelzinken (30) unabhängig voneinander einstellbar sind.

6. Bodenbearbeitungsmaschine (10) nach einem der vorhergehenden Ansprüche, **dadurch gekennzeichnet, dass** zumindest einer ersten Gruppe (G1) von Striegelzinken (30) und/oder zumindest einer zweiten Gruppe (G2) von Striegelzinken (30) zumindest eine Erfassungseinrichtung (100) zur Erfassung einer Stellgröße für die erste Vorspanneinrichtung (50; 50.1) und/oder die zweite Vorspanneinrichtung (50; 50.2) zugeordnet ist.

7. Bodenbearbeitungsmaschine (10) nach einem der vorhergehenden Ansprüche, **dadurch gekennzeichnet, dass** zumindest einer ersten Gruppe (G1) von Striegelzinken (30) und/oder zumindest einer zweiten Gruppe (G2) von Striegelzinken (30) zumindest eine Überwachungseinrichtung zur Erfassung einer Stellgröße für die erste Vorspanneinrichtung (50; 50.1) und/oder die zweite Vorspanneinrichtung (50; 50.1) zugeordnet ist, wobei die Überwachungseinrichtung dazu eingerichtet ist, als Stellgröße zumindest eines von folgendem zu erfassen,
- ein Arbeitsergebnis der Gruppe (G1; G2) von Striegelzinken (30), insbesondere einen Verschüttungsgrad und/oder
- das vorhanden sein einer Reihe von Nutzpflanzen.

8. Bodenbearbeitungsmaschine (10) nach einem der vorhergehenden Ansprüche, **dadurch gekennzeichnet, dass** die erste Vorspanneinrichtung (50; 50.1) und die zweite Vorspanneinrichtung (50; 50.2) derartig zueinander verstellbar sind,
- dass die Vorspannkraft und/oder Arbeitstiefe der zumindest einen ersten Gruppe (G1) von Striegelzinken (30) zumindest weitgehend gleich ist zur Vorspannkraft und/oder Arbeitstiefe der zumindest einen zweiten Gruppe (G2) von Striegelzinken (30), oder
- dass die Vorspannkraft und/oder Arbeitstiefe der zumindest einen ersten Gruppe (G1) von Striegelzinken (30) einen definierten und/oder definierbaren Differenzwert zur Vorspannkraft und/oder Arbeitstiefe der zumindest einen zweiten Gruppe (G2) von Striegelzinken (30) aufweist.

9. Bodenbearbeitungsmaschine (10) nach einem der vorhergehenden Ansprüche, **dadurch gekennzeichnet, dass**
- diese zumindest zwei erste Gruppen (G1) von Striegelzinken (30) und/oder zumindest zwei zweite Gruppen (G2) von Striegelzinken (30) aufweist, welche eine Arbeitsbreite aufweisen welche maximal 25cm und/oder maximal 35cm und/oder maximal 50cm und/oder maximal 80 cm und/oder maximal 100cm beträgt, und/oder
- die zumindest zwei ersten Gruppen (G1) von Striegelzinken (30) eine andere Arbeitsbreite aufweisen als die zumindest zwei zweiten Gruppen (G2) von Striegelzinken (30), insbesondere auf Reihenabstände einer Reihenkultur angepasste Arbeitsbreiten.

10. Bodenbearbeitungsmaschine (10) nach einem der vorhergehenden Ansprüche, **dadurch gekennzeichnet, dass** diese ein Positionsbestimmungssystem umfasst und dass zumindest eine erste Vorspanneinrichtung (50; 50.1) und/oder zweite Vorspanneinrichtung (50; 50.2) basierend auf vom Positionsbestimmungssystem bestimmten Positionen von zumindest einer erste Gruppe (G1) von Striegelzinken (30) und/oder zumindest einer zweite Gruppe (G2) von Striegelzinken (30) angesteuert werden.

11. Bodenbearbeitungsmaschine (10) nach einem der vorhergehenden Ansprüche, **dadurch gekennzeichnet, dass**
- die Striegelzinken (30) jeweils eine eigene Montagevorrichtung umfassen, mittels der sie an dem Träger (80) drehbar gelagert sind, wodurch vorzugsweise die jeweiligen Striegelzinken (30) unabhängig voneinander an eine Bodenkontur anpassbar sind, und/oder
- die jeweilige Montagevorrichtung die Schwenkbarkeit der Striegelzinken (30) definiert und/oder die jeweiligen Striegelzinken (30) von ein und demselben Träger (80) unabhängig voneinander an eine Bodenkontur anpassbar sind.

12. Bodenbearbeitungsmaschine (10) nach einem der vorhergehenden Ansprüche, **dadurch gekennzeichnet, dass** die Bodenbearbeitungsmaschine (10) eine vorzugsweise motorisierte Höhenverstellungsvorrichtung aufweist, um eine Höhe der Rahmenkonstruktion (22) automatisiert zu verstellen.

13. Bodenbearbeitungsmaschine (10) nach einem der vorhergehenden Ansprüche, **dadurch gekennzeichnet, dass**
- mit der ersten Vorspanneinrichtung (50; 50.1) und der zweiten Vorspanneinrichtung (50; 50.2) jeweils eine Drehbewegung auf einen jeweiligen Schwenkhebel (90) übertragbar ist, und/oder
- mit den Schwenkhebeln (90) jeweils Verbindungselemente (70) zur Koppelung mit den jeweiligen Überlastsicherungen (60) derartig verbunden sind, dass anhand einer Drehlage der Schwenkhebel (90) die Drehlage der Striegelzinken (30) und somit vorzugsweise deren Vorspannkraft und/oder deren Arbeitstiefe verstellbar ist.

14. Bodenbearbeitungsmaschine (10) nach einem der vorhergehenden Ansprüche, **dadurch gekennzeichnet, dass**
- ein oder mehrere Tragbalken der Rahmenkonstruktion (22), der Träger (80) oder die Träger (80) und/oder die Schwenkhebel (90) quer zur Fahrt- und/oder Arbeitsrichtung (FR) der Bodenbearbeitungsmaschine (10) ausgerichtet sind, und/oder
- die erste Vorspanneinrichtung (50; 50.1) und die zweite Vorspanneinrichtung (50; 50.2), die Verbindungselemente (70) und/oder die Überlastsicherungen (60) in im Wesentlichen parallel zur Fahrt- und/oder Arbeitsrichtung (FR) der Bodenbearbeitungsmaschine (10) verlaufenden Ebenen ausgerichtet sind.

15. Bodenbearbeitungsmaschine (10) nach einem der vorhergehenden Ansprüche, **dadurch gekennzeichnet, dass** die Bodenbearbeitungsmaschine (10) eine Arbeitsbreite von 6 Meter oder mehr aufweist und die erste Vorspanneinrichtung (50; 50.1) und die zweite Vorspanneinrichtung (50; 50.2) an der Rahmenkonstruktion (22) montiert sind.

16. Bodenbearbeitungsmaschine (10) nach einem der vorhergehenden Ansprüche, **dadurch gekennzeichnet, dass** der ersten Gruppen (G1) von Striegelzinken (30) und der zweiten Gruppe (G2) von Striegelzinken (30) jeweils zumindest eines von folgendem zugeordnet ist:
- zumindest ein Sensor zur Erfassung von Beschleunigungen und/oder Bewegungen eines der Striegelzinken (30),
- zumindest ein Sensor zur Erfassung einer Winkellage eines der Striegelzinken (30), und/oder
- zumindest ein Zugsensor für eines der Verbindungselemente (70).

17. Bodenbearbeitungsmaschine (10) nach einem der vorhergehenden Ansprüche, **dadurch gekennzeichnet, dass** die Bodenbearbeitungsmaschine (10) zumindest eines von folgendem umfasst:
- zumindest einen Sensor zum Erfassen einer Lage der Rahmenkonstruktion (22) im Raum und/oder einer Position der Rahmenkonstruktion (22) relativ zum Boden, und/oder
- zumindest einen Drucksensor für die erste Vorspanneinrichtung (50; 50.1) und zumindest einen Drucksensor für die zweite Vorspanneinrichtung (50; 50.2).

18. Bodenbearbeitungsmaschine (10) nach einem der vorhergehenden Ansprüche, **dadurch gekennzeichnet, dass** die Striegelzinken (30) an einem Träger (80) gelagert sind und der Träger (80) drehfest und/oder höhenverstellbar gegenüber der Rahmenkonstruktion (22) an der Rahmenkonstruktion (22) gelagert ist.

19. Verfahren zum Einstellen einer Vorspannkraft von Striegelzinken (30) an einem Hackstriegel (10), **gekennzeichnet durch** die Schritte
- Bereitstellen einer landwirtschaftlichen Bodenbearbeitungsmaschine (10) nach zumindest einem der Ansprüche 1 bis 18,
- Definition einer Ist-Lage und einer Differenz zu einer Soll-Lage einer ersten Gruppe (G1) von Striegelzinken (30),
- Definition einer Ist-Lage und einer Differenz zu einer Soll-Lage einer zweiten Gruppe (G2) von Striegelzinken (30),
- Unabhängige Ansteuerung einer die Vorspannkraft einer ersten Gruppe (G1) von Striegelzinken (30) beeinflussenden ersten Vorspanneinrichtung (50; 50.1) zu einer Ansteuerung einer die Vorspannung einer zweiten Gruppe (G2) von Striegelzinken (30) beeinflussenden zweiten Vorspanneinrichtung (50;50.2).

## Claims

1. A soil cultivating machine (10), namely an agricultural weeding harrow (10), with a frame structure (22) and with a plurality of harrow tines (30) arranged spaced apart next to one another and in a plurality of rows one behind the other, which harrow tines (30) are mounted pivotably with respect to the frame structure (22) and are each coupled to a pretensioning device (50; 50.1; 50. 2), **characterized in that** the harrow tines (30) are subdivided into at least one first group (G1) of harrow tines (30) with a first pretensioning device (50; 50.1) and at least one second group (G2) of harrow tines (30) with a second pretensioning device (50; 50.2), and the first pretensioning device (50; 50.1) can be adjusted independently of the second pretensioning device (50; 50.2),
wherein the at least one first group (G1) of harrow tines (30) and the at least one second group (G2) of harrow tines (30) comprises a plurality of harrow tines (30) mounted side by side on a support (80).

2. Soil cultivating machine (10) according to claim 1, **characterized in that**
- the harrow tines (30) are rotatably mounted on a support (80) of the frame structure (22), and/or
- the harrow tines (30) are mounted on a support (80) and the support (80) is mounted on the frame structure (22) so as to be rotatable and/or adjustable in height relative to the frame structure (22).

3. Soil cultivating machine (10) according to any one of the preceding claims, **characterized in that** the at least one first group (G1) of harrow tines (30) and/or the at least one second group (G2) of harrow tines (30) comprises a plurality of harrow tines (30) mounted on at least two supports (80) arranged one behind the other.

4. Soil cultivating machine (10) according to any one of the preceding claims, **characterized in that** the at least one first group (G1) of harrow tines (30) and/or the at least one second group (G2) of harrow tines (30) comprises a plurality of harrow tines (30) mounted side by side on a support (80) and comprises a plurality of harrow tines (30) mounted on at least two supports (80) arranged one behind the other.

5. Soil cultivating machine (10) according to any one of the preceding claims, **characterized in that** the first pretensioning device (50; 50.1) and the second pretensioning device (50; 50. 2) are each coupled to the harrow tines (30) via overload protection devices (60) and/or the respective harrow tines (30) each comprise an own overload protection device (60), whereby preferably a force setting of the harrow tines (30) can be varied via a pretension of the respective overload protection devices (60) and/or a force setting and/or a harrow angle of the respective harrow tines (30) can be set independently of one another.

6. Soil cultivating machine (10) according to any one of the preceding claims, **characterized in that** at least one first group (G1) of harrow tines (30) and/or at least one second group (G2) of harrow tines (30) is assigned at least one detection device (100) for detecting an actuating variable for the first pretensioning device (50; 50.1) and/or the second pretensioning device (50; 50.2).

7. Soil cultivating machine (10) according to any one of the preceding claims, **characterized in that** at least one first group (G1) of harrow tines (30) and/or at least one second group (G2) of harrow tines (30) is assigned at least one monitoring device for detecting an actuating variable for the first pretensioning device (50; 50.1) and/or the second pretensioning device (50; 50.1), the monitoring device being configured to detect at least one of the following as an actuating variable,
- a work result of the group (G1; G2) of harrow tines (30), in particular a degree of spillage and/or
- the presence of a row of crops.

8. Soil cultivating machine (10) according to any one of the preceding claims, **characterized in that** the first pretensioning device (50; 50.1) and the second pretensioning device (50; 50.2) are adjustable relative to one another in such a way,
- that the pretensioning force and/or working depth of the at least one first group (G1) of harrow tines (30) is at least substantially equal to the pretensioning force and/or working depth of the at least one second group (G2) of harrow tines (30), or
- that the pretensioning force and/or working depth of the at least one first group (G1) of harrow tines (30) has a defined and/or definable differential value with respect to the pretensioning force and/or working depth of the at least one second group (G2) of harrow tines (30).

9. Soil cultivating machine (10) according to any one of the preceding claims, **characterized in that**
- it comprises at least two first groups (G1) of harrow tines (30) and/or at least two second groups (G2) of harrow tines (30) which have a working width which is at most 25cm and/or at most 35cm and/or at most 50cm and/or at most 80cm and/or at most 100cm, and/or
- the at least two first groups (G1) of harrow tines (30) have a working width different from the at least two second groups (G2) of harrow tines (30), in particular working widths adapted to row spacings of a row crop.

10. A soil cultivating machine (10) according to any one of the preceding claims, **characterized in that** it comprises a position determining system and that at least one first pretensioning device (50; 50.1) and/or second pretensioning device (50; 50.2) are controlled based on positions of at least one first group (G1) of harrow tines (30) and/or at least one second group (G2) of harrow tines (30) determined by the position determining system.

11. Soil cultivating machine (10) according to any one of the preceding claims, **characterized in that**
- the harrow tines (30) each comprise an own mounting device by means of which they are rotatably mounted on the support (80), whereby preferably the respective harrow tines (30) can be adapted to a soil profile independently of one another, and/or
- the respective mounting device defines the pivotability of the harrow tines (30) and/or the respective harrow tines (30) of one and the same support (80) are independently adaptable to a soil profile.

12. Soil cultivating machine (10) according to any one of the preceding claims, **characterized in that** the soil cultivating machine (10) comprises a preferably motorized height adjustment device for automatically adjusting a height of the frame structure (22).

13. Soil cultivating machine (10) according to any one of the preceding claims, **characterized in that**
- by means of the first pretensioning device (50; 50.1) and the second pretensioning device (50; 50.2) respectively a rotary movement to a respective pivot lever (90) is transferrable, and/or
- connecting elements (70) for coupling with the respective overload protection devices (60) are connected respectively to the pivot levers (90) in such a way that, by means of a rotational position of the pivot levers (90), the rotational position of the harrow tines (30) and thus preferably their pretensioning force and/or their working depth can be adjusted.

14. Soil cultivating machine (10) according to any of the preceding claims, **characterized in that**
- one or more supporting beams of the frame structure (22), the support (80) or the supports (80) and/or the pivot levers (90) are aligned transversely to the travel and/or working direction (FR) of the soil cultivating machine (10), and/or
- the first pretensioning device (50; 50.1) and the second pretensioning device (50; 50.2), the connecting elements (70) and/or the overload protection devices (60) are aligned in planes extending substantially parallel to the travel and/or working direction (FR) of the soil cultivating machine (10).

15. Soil cultivating machine (10) according to any one of the preceding claims, **characterized in that** the soil cultivating machine (10) has a working width of 6 meters or more and the first pretensioning device (50; 50.1) and the second pretensioning device (50; 50.2) are mounted on the frame structure (22).

16. Soil cultivating machine (10) according to any one of the preceding claims, **characterized in that** the first group (G1) of harrow tines (30) and the second group (G2) of harrow tines (30) are each associated with at least one of the following:
- at least one sensor for detecting accelerations and/or movements of one of the harrow tines (30),
- at least one sensor for detecting an angular position of one of the harrow tines (30), and/or
- at least one tension sensor for one of the connecting elements (70).

17. Soil cultivating machine (10) according to any one of the preceding claims, **characterized in that** the soil cultivating machine (10) comprises at least one of the following:
- at least one sensor for detecting a position of the frame structure (22) in space and/or a position of the frame structure (22) relative to the soil, and/or
- at least one pressure sensor for the first pretensioning device (50; 50.1) and at least one pressure sensor for the second pretensioning device (50; 50.2).

18. Soil cultivating machine (10) according to any one of the preceding claims, **characterized in that** the harrow tines (30) are mounted on a support (80) and the support (80) is mounted on the frame structure (22) in a rotationally fixed and/or height-adjustable manner relative to the frame structure (22).

19. A method for adjusting a pretensioning force of harrow tines (30) on a weeding harrow (10), **characterized by** the steps of
- providing an agricultural soil cultivating machine (10) according to at least one of claims 1 to 18,
- defining an actual position and a difference from a desired position of a first group (G1) of harrow tines (30),
- defining an actual position and a difference from a desired position of a second group (G2) of harrow tines (30),
- independent control of a first pretensioning device (50; 50.1) affecting the pretensioning force of a first group (G1) of harrow tines (30) to a control of a second pretensioning device (50; 50.2) affecting the pretensioning force of a second group (G2) of harrow tines (30).

## Revendications

1. Machine de travail du sol (10), à savoir une herse agricole (10), comprenant une structure de cadre (22) et une pluralité de dents de herse (30) disposées à distance les unes à côté des autres et en plusieurs rangées les unes derrière les autres, lesquelles dents de herse (30) sont montées de manière à pouvoir pivoter par rapport à la structure de cadre (22) et sont chacune accouplées à un dispositif de précontrainte (50 ; 50.1; 50.2), **caractérisée en ce que** les dents de herse (30) sont divisées en au moins un premier groupe (G1) de dents de herse (30) pourvu d'un premier dispositif de précontrainte (50 ; 50.1) et au moins un deuxième groupe (G2) de dents de herse (30) pourvu d'un deuxième dispositif de précontrainte (50 ; 50.2), et le premier dispositif de précontrainte (50 ; 50.1) est réglable indépendamment du deuxième dispositif de précontrainte (50 ; 50.2),
l'au moins un premier groupe (G1) de dents de herse (30) et l'au moins un deuxième groupe (G2) de dents de herse (30) comprenant une pluralité de dents de herse (30) montées les unes à côté des autres sur un élément porteur (80).

2. Machine de travail du sol (10) selon la revendication 1, **caractérisée en ce que**
- les dents de herse (30) sont montées de manière à pouvoir tourner sur un élément porteur (80) de la structure de cadre (22), et/ou
- les dents de herse (30) sont montées sur un élément porteur (80) et l'élément porteur (80) est monté sur la structure de cadre (22) de manière à pouvoir tourner et/ou être réglable en hauteur par rapport à la structure de cadre (22).

3. Machine de travail du sol (10) selon l'une des revendications précédentes, **caractérisée en ce que** l'au moins un premier groupe (G1) de dents de herse (30) et/ou l'au moins un deuxième groupe (G2) de dents de herse (30) comprennent une pluralité de dents de herse (30) montées sur au moins deux éléments porteurs (80) disposés l'un derrière l'autre.

4. Machine de travail du sol (10) selon l'une des revendications précédentes, **caractérisée en ce que** l'au moins un premier groupe (G1) de dents de herse (30) et/ou l'au moins un deuxième groupe (G2) de dents de herse (30) comprennent une pluralité de dents de herses (30) montées les unes à côté des autres sur un élément porteur (30) et comprend une pluralité de dents de herse (80) montées sur au moins deux éléments porteurs (80) disposés l'un derrière l'autre.

5. Machine de travail du sol (10) selon l'une des revendications précédentes, **caractérisée en ce que** le premier dispositif de précontrainte (50 ; 50.1) et le deuxième dispositif de précontrainte (50 ; 50.2) sont accouplés aux dents de herse (30) respectivement par le biais de dispositifs de sécurité de surcharge (60) et/ou les dents de herse (30) respectives comprennent respectivement un dispositif de sécurité de surcharge (60) propre, moyennant quoi un réglage de force des dents de herse (30) peut de préférence être modifié par le biais d'une précontrainte des dispositifs de sécurité de surcharge (60) respectifs et/ou un réglage de force et/ou un angle de herse des dents de herse (30) respectives peuvent être réglés indépendamment les uns des autres.

6. Machine de travail du sol (10) selon l'une des revendications précédentes, **caractérisée en ce qu'**au moins un dispositif de détection (100) destiné à détecter une grandeur de réglage pour le premier dispositif de précontrainte (50 ; 50.1) et/ou le deuxième dispositif de précontrainte (50 ; 50.2) est associé à au moins un premier groupe (G1) de dents de herse (30) et/ou au moins un deuxième groupe (G2) de dents de herse (30).

7. Machine du travail du sol (10) selon l'une des revendications précédentes, **caractérisée en ce qu'**au moins un dispositif de surveillance destiné à détecter une grandeur de réglage pour le premier dispositif de précontrainte (50 ; 50.1) et/ou le deuxième dispositif de précontrainte (50 ; 50.1) est associé à au moins un premier groupe (G1) de dents de herse (30) et/ou au moins un deuxième groupe (G2) de dents de herse (30), le dispositif de surveillance étant conçu pour détecter au moins l'une des grandeurs suivantes en tant que grandeur de réglage :
- un résultat de travail du groupe (G1 ; G2) de dents de herse (30), en particulier un degré de déversement et/ou
- la présence d'une rangée de plantes utiles.

8. Machine de travail du sol (10) selon l'une des revendications précédentes, **caractérisée en ce que** le premier dispositif de précontrainte (50 ; 50.1) et le deuxième dispositif de précontrainte (50 ; 50.2) sont réglables l'un par rapport à l'autre de telle sorte
- que la force de précontrainte et/ou la profondeur de travail d'au moins un premier groupe (G1) de dents de herse (30) est au moins sensiblement la même que la force de précontrainte et/ou la profondeur de travail d'au moins un deuxième groupe (G2) de dents de herse (30), ou
- que la force de précontrainte et/ou la profondeur de travail de l'au moins un premier groupe (G1) de dents de herse (30) présente une valeur de différence définie et/ou définissable par rapport à la force de précontrainte et/ou à la profondeur de travail de l'au moins un deuxième groupe (G2) de dents de herse (30).

9. Machine de travail du sol (10) selon l'une des revendications précédentes, **caractérisée en ce que**
- celle-ci possède au moins deux premiers groupes (G1) de dents de herse (30) et/ou au moins deux deuxièmes groupes (G2) de dents de herse (30), lesquels présentent une largeur de travail qui est au maximum de 25 cm et/ou au maximum de 35 cm et/ou au maximum de 50 cm et/ou au maximum de 80 cm et/ou au maximum de 100 cm, et/ou
- les au moins deux premiers groupes (G1) de dents de herse (30) présentent une largeur de travail différente de celle des au moins deux deuxièmes groupes (G2) de dents de herse (30), en particulier des largeurs de travail adaptées aux espacements de rangées d'une culture en rangées.

10. Machine de travail du sol (10) selon l'une des revendications précédentes, **caractérisée en ce que** celle-ci comprend un système de détermination de position et **en ce qu'**au moins un premier dispositif de précontrainte (50 ; 50.1) et/ou un deuxième dispositif de précontrainte (50 ; 50.2) sont commandés sur la base de positions déterminées par le système de détermination de position d'au moins un premier groupe (G1) de dents de herse (30) et/ou d'au moins un deuxième groupe (G2) de dents de herse (30).

11. Machine de travail du sol (10) selon l'une des revendications précédentes, **caractérisée en ce que**
- les dents de herse (30) comprennent respectivement un arrangement de montage séparé au moyen duquel elles sont montées rotatives sur l'élément porteur (80), moyennant quoi les dents de herse (30) respectives peuvent de préférence être adaptées indépendamment les unes des autres à un contour du sol, et/ou
- l'arrangement de montage respectif définit la possibilité de pivotement des dents de herse (30) et/ou les dents de herse respectives (30) peuvent être adaptées à un contour du sol par un seul et même élément porteur (80) indépendamment les unes des autres.

12. Machine de travail du sol (10) selon l'une des revendications précédentes, **caractérisée en ce que** la machine de travail du sol (10) possède un dispositif de réglage en hauteur de préférence motorisé afin de régler automatiquement une hauteur de la structure de cadre (22).

13. Machine de travail du sol (10) selon l'une des revendications précédentes, **caractérisée en ce que**
- un mouvement de rotation peut respectivement être transmis à un levier pivotant (90) respectif au moyen du premier dispositif de précontrainte (50 ; 50.1) et du deuxième dispositif de précontrainte (50 ; 50.2), et/ou
- des éléments de liaison (70) respectifs destinés à être accouplés aux dispositifs de sécurité de surcharge (60) respectifs sont reliés aux leviers pivotants (90) de telle sorte que la position de rotation des dents de herse (30) et ainsi, de préférence, leur force de précontrainte et/ou leur profondeur de travail peuvent être réglées à l'aide d'une position de rotation des leviers pivotants (90).

14. Machine de travail du sol (10) selon l'une des revendications précédentes, **caractérisée en ce que**
- une ou plusieurs poutres porteuses de la structure de cadre (22), les éléments porteurs (80) ou les éléments porteurs (80) et/ou les leviers pivotants (90) sont orientés transversalement à la direction de déplacement et/ou de travail (FR) de la machine de travail du sol (10), et/ou
- le premier dispositif de précontrainte (50 ; 50.1) et le deuxième dispositif de précontrainte (50 ; 50.2), les éléments de liaison (70) et/ou les dispositifs de sécurité de surcharge (60) sont orientés dans des plans qui suivent un tracé sensiblement parallèle à la direction de déplacement et/ou de travail (FR) de la machine de travail du sol (10).

15. Machine de travail du sol (10) selon l'une des revendications précédentes, **caractérisée en ce que** la machine de travail du sol (10) présente une largeur de travail de 6 mètres ou plus et le premier dispositif de précontrainte (50 ; 50.1) et le deuxième dispositif de précontrainte (50 ; 50.2) sont montés sur la structure de cadre (22).

16. Machine de travail du sol (10) selon l'une des revendications précédentes, **caractérisée en ce qu'**au moins l'un des éléments suivants est associé respectivement aux premiers groupes (G1) de dents de herse (30) et au deuxième groupe (G2) de dents de herse (30) :
- au moins un capteur destiné à la détection d'accélérations et/ou de mouvements de l'une des dents de herse (30),
- au moins un capteur destiné à la détection d'une position angulaire de l'une des dents de herse (30), et/ou
- au moins un capteur de tension pour l'un des éléments de liaison (70).

17. Machine de travail du sol (10) selon l'une des revendications précédentes, **caractérisée en ce que** la machine de travail du sol (10) comprend au moins l'un des éléments suivants :
- au moins un capteur destiné à détecter une position de la structure de cadre (22) dans l'espace et/ou une position de la structure de cadre (22) par rapport au sol, et/ou
- au moins un capteur de pression pour le premier dispositif de précontrainte (50 ; 50.1) et au moins un capteur de pression pour le deuxième dispositif de précontrainte (50 ; 50.2).

18. Machine de travail du sol (10) selon l'une des revendications précédentes, **caractérisée en ce que** les dents de herse (30) sont montées sur un élément porteur (80) et l'élément porteur (80) est monté sur la structure de cadre (22) en rotation solidaire et/ou réglable en hauteur par rapport à la structure de cadre (22).

19. Procédé pour régler une force de précontrainte de dents de herse (30) sur une herse (10), **caractérisé par** les étapes suivantes
- fourniture d'une machine de travail du sol (10) agricole selon au moins l'une des revendications 1 à 18,
- définition d'une position réelle et d'une différence par rapport à une position de consigne d'un premier groupe (G1) de dents de herse (30),
- définition d'une position réelle et d'une différence par rapport à une position de consigne d'un deuxième groupe (G2) de dents de herse (30),
- commande indépendante d'un premier dispositif de précontrainte (50 ; 50.1) qui influence la force de précontrainte d'un premier groupe (G1) de dents de herse (30) afin de commander un deuxième dispositif de précontrainte (50 ; 50.2) qui influence la précontrainte d'un deuxième groupe (G2) de dents de herse (30).
